(19) **Europäisches Patentamt**
**European Patent Office**
**Office européen des brevets**

(11) **EP 4 510 076 A1**

(12) **EUROPEAN PATENT APPLICATION**
published in accordance with Art. 153(4) EPC

(43) Date of publication:
**19.02.2025 Bulletin 2025/08**

(21) Application number: **23787634.7**

(22) Date of filing: **10.04.2023**

(51) International Patent Classification (IPC):
***G06T 9/00*** *(2006.01)*

(52) Cooperative Patent Classification (CPC):
**G06T 9/00; G06T 17/20**

(86) International application number:
**PCT/CN2023/087281**

(87) International publication number:
**WO 2023/197990 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.04.2022 CN 202210378876**

(71) Applicant: **Vivo Mobile Communication Co., Ltd.**
**Dongguan, Guangdong 523863 (CN)**

(72) Inventors:
• ZOU, Wenjie
  Dongguan, Guangdong 523863 (CN)
• ZHANG, Wei
  Dongguan, Guangdong 523863 (CN)
• YANG, Fuzheng
  Dongguan, Guangdong 523863 (CN)
• LV, Zhuoyi
  Dongguan, Guangdong 523863 (CN)

(74) Representative: **Lavoix**
**Bayerstraße 83**
**80335 München (DE)**

(54) **CODING METHOD, DECODING METHOD AND TERMINAL**

(57) This application discloses an encoding method, a decoding method, and a terminal, and belongs to the technical field of encoding and decoding. The encoding method in embodiments of this application includes: An encoder side encodes first information corresponding to a target three-dimensional mesh, to obtain a first bitstream. The first information is determined based on geometry information corresponding to the target three-dimensional mesh. The encoder side determines a second bitstream based on connection information corresponding to a first reconstructed mesh. The first reconstructed mesh is determined based on the first information and the target three-dimensional mesh. The encoder side determines a third bitstream based on target information and an attribute encoding manner. The target information includes attribute information corresponding to the first reconstructed mesh or includes the target three-dimensional mesh and a target texture map corresponding to the target three-dimensional mesh. The encoder side generates a target bitstream based on the first bitstream, the second bitstream, and the third bitstream.

| An encoder side encodes first information corresponding to a target three-dimensional mesh, to obtain a first bitstream | S101 |

↓

| The encoder side determines a second bitstream based on connection information corresponding to a reconstructed mesh | S102 |

↓

| Determine a third bitstream based on target information and an attribute encoding manner | S103 |

↓

| The encoder side generates a target bitstream based on the first bitstream, the second bitstream, and the third bitstream | S104 |

FIG. 1

EP 4 510 076 A1

**Description**

**CROSS-REFERENCE TO RELATED APPLICATIONS**

This application claims the priority of Chinese Patent Application No. 202210378876.4 filed in China on April 12, 2022, the entire content of which is hereby incorporated by reference.

**TECHNICAL FIELD**

This application belongs to the field of encoding and decoding technology, and specifically, to an encoding method, a decoding method and a terminal.

**BACKGROUND**

A three-dimensional mesh (Mesh) may be considered as a most popular method for representing a three-dimensional model in the past years, and plays an important role in many application programs. The representation of the three-dimensional model is simple. Therefore, the three-dimensional model is widely integrated into graphics processing units of a computer, a tablet computer, and a smart phone based on hardware algorithms, and is specially used for rendering the three-dimensional mesh.

In all application fields that use the three-dimensional mesh, such as computational simulation, entertainment, medical imaging, digital cultural relics, computer design, e-commerce, and the like, requirements on grid accuracy have been increasing, and an amount of data required is also increasing rapidly. Moreover, a large quantity of three-dimensional models need to be accessed through an internet currently. The foregoing problems lead to increasingly complex processing, visualization, transmission and storage of the three-dimensional mesh. However, compression of the three-dimensional mesh is an important way to solve the above problems. This greatly reduces the amount of data, and is beneficial to the processing, storage, and transmission of the three-dimensional mesh.

Generally, the most important information in the three-dimensional mesh is geometry information. Because the geometry information describes a shape of a three-dimensional object, compression of the geometry information may be implemented using a video-based point-cloud-compression standard. In addition, for some applications, because a model does not need to be restored to original precision, lossy compression is mostly used, and for a three-dimensional mesh with a texture map, the texture map also needs to be compressed. However, after the lossy compression of the geometry information of the three-dimensional mesh, there may be a large deviation in a corresponding relationship between texture coordinates corresponding to vertices in the three-dimensional mesh and positions of vertices in the texture map corresponding to the three-dimensional mesh. Consequently, after the geometry information is reconstructed, the texture coordinates cannot be correctly adjusted based on a reconstructed mesh, resulting in a failure in encoding and decoding.

**SUMMARY**

Embodiments of this application provide an encoding method, a decoding method, and a terminal, which can solve a problem that a failure in encoding and decoding is easily caused when lossy compression is performed on geometry information.

According to a first aspect, an encoding method is provided, and the method includes:

An encoder side encodes first information corresponding to a target three-dimensional mesh, to obtain a first bitstream. The first information is determined based on geometry information corresponding to the target three-dimensional mesh.

The encoder side determines a second bitstream based on connection information corresponding to a first reconstructed mesh. The first reconstructed mesh is determined based on the first information and the target three-dimensional mesh.

The encoder side determines a third bitstream based on target information and an attribute encoding manner. The target information includes attribute information corresponding to the first reconstructed mesh or includes the target three-dimensional mesh and a target texture map corresponding to the target three-dimensional mesh.

The encoder side generates a target bitstream based on the first bitstream, the second bitstream, and the third bitstream.

According to a second aspect, a decoding method is provided, including:

A decoder side decomposes an obtained target bitstream, to obtain first information, decoding information, an attribute encoding manner, and a third bitstream.

The decoder side obtains geometry information corresponding to a target three-dimensional mesh based on the first information.

The decoder side determines connection information corresponding to the target three-dimensional mesh based on the decoding information.

The decoder side determines attribute information corresponding to the target three-dimensional mesh based on the third bitstream and the attribute encoding manner.

According to a third aspect, an encoding apparatus is provided, including:

an encoding module, configured to encode first information corresponding to a target three-dimensional mesh, to obtain a first bitstream, where the first information is determined based on geometry information corresponding to the target three-dimensional mesh;

a first determining module, configured to determine a second bitstream based on connection information corresponding to a first reconstructed mesh, where the first reconstructed mesh is determined based on the first information and the target three-dimensional mesh;

a second determining module, configured to determine a third bitstream based on target information and an attribute encoding manner, where the target information includes attribute information corresponding to the first reconstructed mesh or includes the target three-dimensional mesh and a target texture map corresponding to the target three-dimensional mesh; and

a generation module, configured to generate a target bitstream based on the first bitstream, the second bitstream, and the third bitstream.

According to a fourth aspect, a decoding apparatus is provided, including:

a decomposition module, configured to decompose an obtained target bitstream, to obtain first information, decoding information, an attribute encoding manner, and a third bitstream;

an obtaining module, configured to obtain geometry information corresponding to a target three-dimensional mesh based on the first information;

a third determining module, configured to determine connection information corresponding to the target three-dimensional mesh based on the decoding information; and

a fourth determining module, configured to determine attribute information corresponding to the target three-dimensional mesh based on the third bitstream and the attribute encoding manner.

According to a fifth aspect, a terminal is provided. The terminal includes a processor and a memory, where a program or instructions executable on the processor is/are stored in the memory; and when the program or the instructions is/are executed by the processor, the steps of the method according to the first aspect or the steps of the method according to the second aspect are implemented.

According to a sixth aspect, a readable storage medium is provided. The readable storage medium stores a program or instructions; and when the program or the instructions is/are executed by a processor, the steps of the method according to the first aspect or the steps of the method according to the second aspect are implemented.

According to a seventh aspect, a chip is provided. The chip includes a processor and a communication interface. The communication interface is coupled to the processor, and the processor is configured to run a program or instructions, to implement the method according to the first aspect or implement the method according to the second aspect.

According to an eighth aspect, a computer program/program product is provided. The computer program/program product is stored in a storage medium. The computer program/program product is executed by at least one processor, to implement the steps of the method according to the first aspect or implement the steps of the method according to the second aspect.

In embodiments of this application, first information corresponding to a target three-dimensional mesh is encoded, to obtain a first bitstream; a second bitstream is determined based on connection information corresponding to a first reconstructed mesh, where the first reconstructed mesh is determined based on the first information and the target three-dimensional mesh; a third bitstream is determined based on target information and an attribute encoding manner, where the target information includes attribute information corresponding to the first reconstructed mesh or includes the target three-dimensional mesh and a target texture map corresponding to the target three-dimensional mesh; and further, a target bitstream is generated based on the first bitstream, the second bitstream, and the third bitstream. In the foregoing technical solutions, based on the attribute encoding manner, the attribute information corresponding to the first reconstructed mesh is encoded, to obtain the third bitstream; or based on the attribute encoding manner, the target three-dimensional mesh and the target texture map are used for obtaining the third bitstream. In this way, after lossy compression is performed on geometry information of the target three-dimensional mesh, an attribute information bitstream can be obtained by using the foregoing manner, to avoid a failure in encoding.

## BRIEF DESCRIPTION OF THE DRAWINGS

FIG. 1 is a flowchart of an encoding method according to an embodiment of this application;

FIG. 2 is a diagram of a process of merging vertices in mesh simplification;

FIG. 3 is a diagram of a mesh-based fine division process;

FIG. 4 is a diagram of eight directions of patch arrangement;

FIG. 5 is a diagram of a process of encoding high-precision geometry information;

FIG. 6 is a diagram of a raw patch (raw patch);

FIG. 7 is a first diagram of encoding a connectivity relationship in an embodiment of this application;

FIG. 8 is a second diagram of encoding a connectivity relationship in an embodiment of this application;

FIG. 9 is a diagram of encoding attribute information in an embodiment of this application;

FIG. 10 (a) is an image of representation of a target three-dimensional mesh in an embodiment of this application;

FIG. 10 (b) is an effect diagram of a target texture map according to an embodiment of this application;

FIG. 10 (c) is an effect diagram of a reconstructed texture map in an embodiment of this application;

FIG. 11 is a flowchart of a decoding method according to an embodiment of this application;

FIG. 12 is a block diagram of reconstruction of geometry information;

FIG. 13 is a diagram of a structure of an encoding apparatus according to an embodiment of this application;

FIG. 14 is a diagram of a structure of a decoding apparatus according to an embodiment of this application;

FIG. 15 is a diagram of a structure of a communication device according to an embodiment of this application; and

FIG. 16 is a diagram of a hardware structure of a terminal according to an embodiment of this application.

## DETAILED DESCRIPTION

The technical solutions in embodiments of this application are clearly described in the following with reference to the accompanying drawings in embodiments of this application. It is clear that the described embodiments are merely a part rather than all of embodiments of this application. All other embodiments obtained by a person of ordinary skills in the art based on embodiments of this application fall within the protection scope of this application.

The terms "first", "second", and the like in the specification and claims of this application are used to distinguish between similar objects, but are not used to describe a specific sequence or order. It should be understood that the terms used in this way are exchangeable in a proper case, so that embodiments of this application can be implemented in an order other than the order shown or described herein. In addition, objects distinguished using "first" and "second" are usually of one type, and a quantity of the objects is not limited. For example, a first object may be one or more. In addition, "and/or" in the specification and the claims indicates at least one of the connected objects, and the character "/" usually indicates an "or" relationship between the associated objects.

The predictive encoding apparatus corresponding to the prediction encoding method and the prediction decoding apparatus corresponding to the prediction decoding method in embodiments of this application may be terminals. The terminal may also be referred to as a terminal device or a user terminal (User Equipment, UE). The terminal may be a terminal-side device such as a mobile phone, a tablet computer (Tablet Personal Computer), a laptop computer (Laptop Computer) or a notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device) or a vehicle-mounted device (Vehicle User Equipment, VUE), a pedestrian terminal (Pedestrian User Equipment, PUE), a smart home (a home device having a wireless communication function, such as a refrigerator, a television, a washing machine, or furniture), a game console, a personal computer (personal computer, PC), or a teller machine or a self-service machine. The wearable device includes: a smart watch, a smart bracelet, smart headphones, smart glasses, smart jewelry (a smart bangle, a smart bracelet, a smart ring, a smart necklace, a smart anklet bangle, a smart anklet, and the like), a smart wristband, smart clothing, and the like. It should be noted that, a specific type of the terminal is not limited in embodiments of this application.

The encoding method provided in embodiments of this application is described in detail below with reference to the accompanying drawings by using some embodiments and application scenarios thereof.

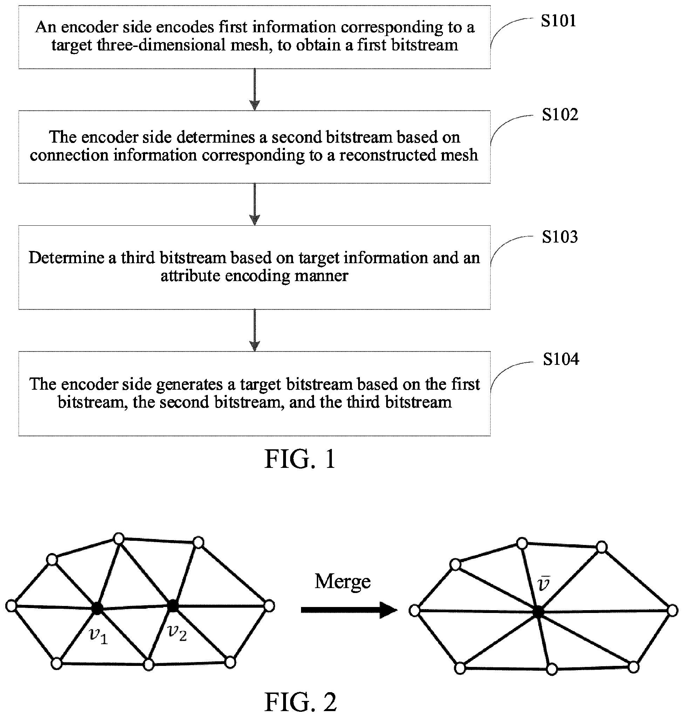

FIG. 1 is a flowchart of an encoding method according to this application. The encoding method provided in this embodiment includes the following steps.

S101: An encoder side encodes first information corresponding to a target three-dimensional mesh, to obtain a first bitstream.

The target three-dimensional mesh may be a three-dimensional mesh corresponding to any video frame.

In this step, the first information corresponding to the target three-dimensional mesh may be determined based on geometry information corresponding to the target three-dimensional mesh, and then the first information may be encoded to obtain the first bitstream. For a specific definition of the first information and a specific technical solution on how to obtain the first information, refer to subsequent embodiments.

S102: The encoder side determines a second bitstream based on connection information corresponding to a first reconstructed mesh.

In this step, the encoder side may perform geometry reconstruction based on encoding information of the first information. It should be noted that, the geometry reconstruction herein refers to obtaining of three-dimensional coordinates based on the encoding information. Further, the encoder side performs mesh reconstruction based on reconstructed geometry information and the target three-dimensional mesh, to obtain the first reconstructed mesh; and obtains the connection information corresponding to the first reconstructed mesh based on the first reconstructed mesh. The connection information represents connectivity between vertices in the mesh.

It should be noted that, the encoding information of the geometry information is used to perform mesh reconstruction, and then the connection information is obtained based on the first reconstructed mesh. This can ensure that the obtained connection information is more accurate.

It should be further noted that, after obtaining the first reconstructed mesh, the encoder side obtains the connection information of the first reconstructed mesh, and then encodes the connection information, to obtain a bitstream, that is, the second bitstream corresponding to the connection information.

S103: The encoder side determines a third bitstream based on target information and an attribute encoding manner.

It should be understood that a state identifier in subsequent embodiments may be used to represent the attribute encoding manner, and the target information includes attribute information corresponding to the first reconstructed mesh or includes the target three-dimensional mesh and a target texture map corresponding to the target three-dimensional mesh.

In an optional embodiment, after the first reconstructed mesh is obtained, the attribute information corresponding to the first reconstructed mesh is obtained, and the encoder side encodes the attribute information, to obtain a bitstream, that is, the third bitstream corresponding to the attribute information. The attribute information includes, but is not limited to, a mesh UV coordinate attribute and a texture map.

In another optional embodiment, reconstructed texture coordinate information and a reconstructed texture map are generated using the target three-dimensional mesh and the target texture map corresponding to the target three-dimensional mesh, and the reconstructed texture coordinate information and the reconstructed texture map are encoded, to obtain the bitstream, that is, the third bitstream corresponding to the attribute information.

In another optional embodiment, reconstructed texture coordinate information is generated using the target three-dimensional mesh, a reconstructed texture map is generated using the reconstructed texture coordinate information, the target three-dimensional mesh, and the target texture map corresponding to the target three-dimensional mesh, and the reconstructed texture map is encoded, to obtain the bitstream, that is, the third bitstream corresponding to the attribute information.

S104: The encoder side generates a target bitstream based on the first bitstream, the second bitstream, and the third bitstream.

In this step, after the first bitstream, the second bitstream, and the third bitstream are obtained, the first bitstream, the second bitstream, and the third bitstream are multiplexed, to generate the target bitstream.

In this embodiment of this application, the first information corresponding to the target three-dimensional mesh is encoded, to obtain the first bitstream; the second bitstream is determined based on the connection information corresponding to the first reconstructed mesh, where the first reconstructed mesh is determined based on the first information and the target three-dimensional mesh; the third bitstream is determined based on the target information and the attribute encoding manner, where the target information includes the attribute information corresponding to the first reconstructed mesh or includes the target three-dimensional mesh and the target texture map corresponding to the target three-dimensional mesh; and further, the target bitstream is generated based on the first bitstream, the second bitstream, and the third bitstream. In the foregoing technical solution, based on the attribute encoding manner, the attribute information corresponding to the first reconstructed mesh is encoded, to obtain the third bitstream; or based on the attribute encoding manner, the target three-dimensional mesh and the target texture map are used for obtaining the third bitstream. In this way, after lossy compression is performed on geometry information of the target three-dimensional mesh, an attribute information bitstream can be obtained by using the foregoing manner, to avoid a failure in encoding.

Optionally, before the encoding first information corresponding to a target three-dimensional mesh, the method includes:

in a case of a lossy encoding mode, performing simplification processing on a to-be-encoded three-dimensional mesh, to obtain the target three-dimensional mesh; or
in a case of a lossless encoding mode, determining a to-be-encoded three-dimensional mesh as the target three-dimensional mesh.

In this step, if a mode of encoding a video is the lossy encoding mode, the simplification processing is performed on the to-be-encoded three-dimensional mesh. A three-dimensional mesh obtained through the simplification processing is determined as the target three-dimensional mesh. Through the simplification processing on the three-dimensional mesh, compression efficiency of the geometry information of the three-dimensional mesh is improved, and an amount of data is effectively reduced.

If a mode of encoding a video is the lossless encoding mode, the to-be-encoded three-dimensional mesh may be directly determined as the target three-dimensional mesh.

Optionally, the performing simplification processing on a to-be-encoded three-dimensional mesh, to obtain the target three-dimensional mesh includes:

The encoder side performs simplification processing on the to-be-encoded three-dimensional mesh based on a quantization parameter, to obtain the target three-dimensional mesh.

It should be noted that, the quantization parameter described in this application mainly includes quantization parameters on three components in an X direction, a Y direction, and a Z direction.

Optionally, the performing simplification processing on the target three-dimensional mesh based on a quantization parameter, to obtain the target three-dimensional mesh includes:

When the encoder side performs vertex merging in the to-be-encoded three-dimensional mesh, the encoder side adjusts coordinates of positions of at least a part of vertices obtained after the vertex merging in the to-be-encoded three-dimensional mesh to a multiple of the quantization parameter, to obtain the target three-dimensional mesh.

It should be noted that, when the coordinates of the positions of the vertices obtained after the merging are set, the quantization parameter is considered, and the coordinates of the positions are set to the multiple of the quantization parameter. The multiple may be any value that meets a requirement. In this way, it can be ensured that original positions of the vertices can be restored without additional information during inverse quantization, and an amount of data consumed by high-precision geometry information is reduced.

A specific implementation of the simplification processing is described below.

For an input original mesh, that is, the to-be-encoded three-dimensional mesh, an operation of mesh simplification is performed first. The mesh simplification focuses on a simplified operation and a corresponding error metric. The mesh simplification operation may be edge-based simplification. As shown in FIG. 2, an objective of reducing a quantity of faces and a quantity of vertices can be achieved by merging two vertices of one edge. In addition, the mesh may alternatively be simplified in a mesh simplification manner such as point-based mesh simplification.

In a process of the mesh simplification, a simplified error metric needs to be defined. For example, a sum of coefficients of equations for all neighboring faces of a vertex may be selected as an error metric of the vertex, and an error metric of a corresponding edge is a sum of error metrics of two vertices on the edge. After a manner of the simplification operation and the error metric are determined, the mesh may start to be simplified. For example, the mesh may be divided into one or more patches of local meshes, and a vertex error of an initial mesh in a patch is calculated first to obtain an error of each edge. Then all edges in the patch are arranged based on errors according to a specific rule, such as a rule from small to large. For each time of simplification, edges may be merged according to a specific rule, such as selecting an edge with a smallest error for merging, calculating a position of a vertex obtained after the merging, updating errors of all edges related to the vertex obtained after the merging, and updating an arrangement order of edges. Faces of the mesh are simplified to an expected quantity through iteration.

A specific process is as follows.

1. Calculation of a vertex error

The vertex error may be defined as a sum of coefficients of equations for all neighboring faces of a vertex. For example, one plane is defined for each neighboring face, which may be represented by Formula 1:

$$\text{Formula 1:}\ D^2 = (n^T v + d)^2 = v^T(nn^T)v + 2dn^T v + d^2,$$

where

D is a distance from any vertex to a plane, n is a unit normal vector of the plane, $v$ is a position vector of the vertex, and d is a constant. The vertex error is represented in a form of a quadric as

$$\text{Formula 2:}\ Q = (A, b, c) = (nn^T, dn, d^2),$$

where
Q is the vertex error, and A, b and c are coefficients representing corresponding symbols in Formula 1.

Based on Formula 2, Formula 3 is further obtained as $Q(v) = v^T A v + 2b^T v + c$.

Because the vertex error is the sum of the coefficients of the equations for all the neighboring faces of the vertex, Formula 4 may be made: $Q_1(v) + Q_2(v) = (Q_1 + Q_2)(v) = (A_1 + A_2, b_1 + b_2, c_1 + c_2)(v)$, where $Q(v)$ is the vertex error, $v$ is the corresponding vertex, $Q_1(v)$ is an equation for a neighboring plane 1 of $v$, $Q_2(v)$ is an equation for a neighboring plane 2 of $v$, $A_1$, $A_2$, $b_1$, $b_2$, $c_1$, and $c_2$ are corresponding coefficients. Certainly, if there are a plurality of neighboring faces, a corresponding plane error equation may be continuously added to Formula 4.

2. Vertex merging

A major step in a process of the vertex merging is determining a position of a vertex obtained after merging. According to Formula 3 of the error, a vertex position may be selected to make an error as small as possible. For example, a partial derivative of Formula 3 is taken, it may be obtained that Formula 4 is $\bar{v} = -A^{-1}b$; and

$$\text{Formula 5 is } Q(\bar{v}) = -b^T A^{-1} b + c.$$

It can be learned from the foregoing formulas that only when a matrix $A$ is reversible can a point that minimizes the error be obtained. Therefore, there are a plurality of ways to determine the position of the vertex obtained after the merging. If quality of mesh simplification is considered, in a case that the matrix $A$ is reversible, the vertex position that minimizes the error is selected; or in a case that the matrix $A$ is irreversible, one of points on an edge including two end points may be selected to minimize the error. If complexity of the mesh simplification is considered, a midpoint or one of the two end points of the edge may be directly selected as the position of the vertex obtained after the merging. If efficiency of quantization after the mesh simplification is considered, the position of the vertex obtained after the merging also needs to be adjusted. Because high-precision information needs to be encoded separately after quantization, positions of a part of vertices obtained after merging are adjusted to a multiple of a corresponding quantization parameter. This ensures that original positions can be restored without additional information during inverse quantization, and an amount of data consumed by high-precision geometry information is reduced.

Once the way of selecting the position of the vertex obtained after the merging is determined, the process of the vertex merging may be started. For example, errors of all edges in an initial mesh may be first calculated, and the edges are arranged based on the errors according to a specific rule, such as an order from small to large. For each iteration, an edge with an error satisfying a specific rule, such as an edge with a smallest error is selected. Two end points of an edge are removed from vertices of a mesh and the vertex obtained after the merging is added to a set of the vertices of the mesh. A part or all of neighboring vertices of two vertices before the merging are used as neighboring vertices of the vertex obtained after the merging, and then error metrics of all vertices connected to the vertex obtained through the merging are updated, to obtain an error of a newly generated edge. The arrangement order of the edges is then updated from a global of the patch. The foregoing process is cyclically performed until a quantity of faces required to satisfy the lossy encoding is reached.

3. Update of connectivity

After the vertex merging, because a part of vertices are deleted from and many new vertices are added to the vertex set, connectivity between vertices needs to be updated. For example, in the process of the vertex merging, two vertices before the merging that correspond to a vertex obtained after the merging may be determined. Indexes of all two vertices before the merging that appear in a face only need to be replaced with an index of the vertex obtained after the merging, and then the face with duplicate indexes is deleted, to achieve an objective of updating the connectivity.

The foregoing is a main process of the mesh simplification. In addition, the three-dimensional mesh may also carry the attribute information, and the attribute information may also need to be simplified. For a mesh with attribute information, such as texture coordinates, a color, or a normal vector, vertex coordinates may be expanded to a higher dimension to calculate a vertex error with the attribute information. The texture coordinates are used as an example, vertex coordinates are set to $(x, y, z)$, and the texture coordinates are $(u, v)$. In this case, an expanded vertex is $(x, y, z, u, v)$. An expanded triangle is set to $T = (p, q, r)$. To determine an error metric on high-dimensional space, two standard orthogonal vectors are first calculated, that is:

$$\text{Formula 6: } e_1 = \frac{q-p}{\|q-p\|};$$

and

$$\text{Formula 7:} \quad e_2 = \frac{r - p - (e_1 \cdot (r-p))e_1}{\|r - p - (e_1 \cdot (r-p))e_1\|},$$

where

$e_1, e_2$ are two vectors on a plane where T is located, and " $\cdot$ " represents a dot product of vectors, which defines a coordinate axis that is on this high-dimensional plane and that uses $p$ as an origin. An arbitrary point $v$ is considered. In addition, $u = p - v$. Formula 8 is $\|u\|^2 = (u \cdot e_1)^2 + \cdots + (\mu \cdot e_n)^2$;

that is, Formula 9 is $(u \cdot e_3)^2 + \cdots + (u \cdot e_n)^2 = \|\mu\|^2 - (\mu \cdot e_1)^2 - (u \cdot e_2)^2$.

Because $e_1$, and $e_2$ are two vectors on the plane where T is located, a left term of Formula 9 is a square of a distance from the vertex to the plane where T is located, that is, Formula 10 is $D^2 = \|\mu\|^2 - (\mu \cdot e_1)^2 - (u \cdot e_2)^2$; and

after Formula 10 is expanded and combined, an equation similar to Formula 3 may be obtained, where:

$$\text{Formula 11:} \quad A = I - e_1 e_1^T - e_2 e_2^T;$$

$$\text{Formula 12:} \quad b = (p \cdot e_1)e_1 + (p \cdot e_2)e_2 - p;$$

and

$$\text{Formula 13:} \quad c = p \cdot p - (p \cdot e_1)^2 - (p \cdot e_2)^2.$$

After the foregoing error metric is obtained, subsequent steps same as that of the foregoing three-dimensional information may be performed, to implement simplification of the mesh with the attribute information.

Generally, an edge part of an image may attract attention of people more, thereby affecting evaluation of people on quality of the image. The same is true for the three-dimensional mesh, and people tend to notice a boundary part more easily. Therefore, whether a boundary is maintained or not is also a factor affecting quality during mesh simplification. A boundary of the mesh is usually a boundary of a geometry shape and a boundary of a texture. When one edge belongs to only one face, the edge is a geometry boundary. When a same vertex has two or more sets of texture coordinates, the vertex is a boundary of the sets of texture coordinates. None of the foregoing boundaries should be merged during mesh simplification. Therefore, during each time of simplification, whether a vertex on an edge is a boundary point may be first determined, and if the vertex is the boundary point, the simplification this time is skipped, and a next iteration is directly performed.

Optionally, the encoding first information corresponding to a target three-dimensional mesh, to obtain a first bitstream includes:

The encoder side quantizes the geometry information of the target three-dimensional mesh, to obtain the first information; and

The encoder side encodes the first information, to obtain the first bitstream.

The geometry information may be understood as coordinates of a vertex in the target three-dimensional mesh, and the coordinates usually refer to three-dimensional coordinates.

The first information includes at least one of the following.

A11. First-precision geometry information

It should be noted that, the first-precision geometry information may be understood as low-precision geometry information, that is, the low-precision geometry information refers to quantized geometry information of the target three-dimensional mesh, that is, three-dimensional coordinate information of each vertex included in the target three-dimensional mesh after quantization.

A12. Second-precision geometry information

It should be noted that, the second-precision geometry information may be understood as high-precision geometry information, and the high-precision geometry information may be considered as lost geometry information in a quantization process, that is, lost three-dimensional coordinate information.

A13. Information about a supplementary point

It should be noted that, the information about the supplementary point refers to information about a point that needs additional processing and that is generated in a quantization process, that is, the supplementary point is the point that needs the additional processing and that is generated in the quantization process, for example, a duplicate point with overlapping coordinates of positions, and the duplicate point may be processed, so that the duplicate point can be restored to an original position after inverse quantization.

Optionally, the information about the supplementary point includes at least one of the following.

A131. Index of a vertex in first-precision geometry information corresponding to the supplementary point

It should be noted that, the index is identified, so that points that are in a mesh after quantization and that identify a plurality of points in a three-dimensional mesh before the quantization can be learned. In other words, a plurality of points in the three-dimensional mesh before the quantization coincide after the quantization, and low-precision geometry information of the supplementary point may be determined using the index of the vertex.

A132. Third-precision geometry information of the supplementary point

It should be noted that, the third-precision geometry information may be understood as low-precision geometry information of the supplementary point, that is, three-dimensional coordinate information after the supplementary point is quantized.

A133. Fourth-precision geometry information of the supplementary point

It should be noted that, the fourth-precision geometry information may be understood as high-precision geometry information of the supplementary point, that is, lost three-dimensional coordinate information of the supplementary point in the quantization process.

It should be noted herein that, during specific use, A131 and A133 or A132 and A133 may be used to determine hidden points after quantization.

It should be noted that, after the first information is obtained, the first information may be encoded, and a bitstream obtained through encoding is determined as the first bitstream.

Optionally, the quantizing the geometry information of the target three-dimensional mesh, to obtain the first information includes:

The encoder side quantizes each vertex in the target three-dimensional mesh based on a quantization parameter of each component, to obtain the first-precision geometry information.

It should be noted that, a quantization parameter of each component may be flexibly set based on a usage requirement; and the quantization parameter mainly includes quantization parameters on three components in an X direction, a Y direction, and a Z direction.

Usually, for quantization with a low requirement on precision, only low-precision geometry information may be retained after the quantization; and for quantization with a high requirement on precision, not only low-precision geometry information but also high-precision geometry information needs to be recorded during the quantization, to implement precise mesh restoration during decoding.

In the foregoing case, optionally, the quantizing the geometry information of the target three-dimensional mesh, to obtain the first information includes:

The encoder side obtains the second-precision geometry information based on the first-precision geometry information and a quantization parameter of each component.

For example, it is assumed that three-dimensional coordinates of a specific vertex are $(x, y, z)$, a quantization parameters is $(QP_x, QP_y, QP_z)$, and a calculation process of low-precision geometry information of $(x_l, y_l, z_l)$ and high-precision geometry information of $(x_h, y_h, z_h)$ is shown in Formula 14 to Formula 19:

$$\text{Formula 14:} \quad x_l = f_1(x, QP_x);$$

$$\text{Formula 15:} \quad y_l = f_1(y, QP_y);$$

$$\text{Formula 16:} \quad z_l = f_1(z, QP_z);$$

$$\text{Formula 17: } x_h = f_2(x, x_l, QP_x);$$

$$\text{Formula 18: } y_h = f_2(y, y_l, QP_y);$$

and

$$\text{Formula 19: } z_h = f_2(z, z_l, QP_z),$$

where

a function $f_1$ in Formula 14 to Formula 16 is a quantization function, an input of the quantization function is coordinates of a specific dimension and a quantization parameter of the dimension, and an output of the quantization function is a quantized coordinate value after quantization; and an input of a function $f_2$ in Formula 17 to Formula 19 is an original coordinate value, a quantized coordinate value, and a quantization parameter of a dimension, and an output of the function is a high-precision coordinate value.

The function $f_1$ may have a plurality of calculation manners, and a common calculation manner is shown in Formula 20 to Formula 22, in which calculation is performed by dividing original coordinates of each dimension by a quantization parameter of the dimension. / is a division operator, and a result of a division operation may be rounded in different manners, such as rounding, downward rounding, or upward rounding. The function $f_2$ also has a plurality of calculation manners, and an implementation corresponding to Formula 20 to Formula 22 is shown in Formula 23 to Formula 25, where * is a multiplication operator.

$$\text{Formula 20: } x_l = x \, / \, QP_x;$$

$$\text{Formula 21: } y_l = y \, / \, QP_y;$$

$$\text{Formula 22: } z_l = z \, / \, QP_z;$$

$$\text{Formula 23: } x_h = x - x_l * QP_x;$$

$$\text{Formula 24: } y_h = y - y_l * QP_y;$$

and

$$\text{Formula 25: } z_h = z - z_l * QP_z.$$

When a quantization parameter is an integer power of 2, the function $f_1$ and the function $f_2$ may be implemented using a bit operation, such as Formula 26 to Formula 31:

$$\text{Formula 26: } x_l = x \gg \log_2 QP_x;$$

$$\text{Formula 27: } y_l = y \gg \log_2 QP_y;$$

$$\text{Formula 28: } z_l = z \gg \log_2 QP_z;$$

$$\text{Formula 29: } x_h = x \, \& \, (QP_x - 1);$$

$$\text{Formula 30: } y_h = y \, \& \, (QP_y - 1);$$

and

## Formula 31: $z_h = z \ \& \ (QP_z - 1)$.

It is worth noting that, regardless of which calculation manner is used for the function $f_1$ and the function $f_2$, quantization parameters $QP_x$, $QP_y$, and $QP_z$ may be set flexibly. First, quantization parameters of different components may not be equal, a correlation of the quantization parameters of the different components may be used to establish a relationship between $QP_x$, $QP_y$, and $QP_z$, and different quantization parameters are set for different components; and secondly, quantization parameters of different spatial regions may not be equal, and quantization parameters may be adaptively set based on a sparse degree of vertex distribution in a local region.

It should be noted that, the high-precision geometry information includes detailed information of an outline of the three-dimensional mesh. To further improve compression efficiency, the high-precision geometry information of $(x_h, y_h, z_h)$ may be further processed. In a three-dimensional mesh model, importance degrees of high-precision geometry information of vertices in different regions are different. For a region with sparse vertex distribution, distortion of high-precision geometry information does not have a great impact on a visual effect of the three-dimensional mesh. In this case, to improve the compression efficiency, optionally, the high-precision geometry information may be further quantized, or only high-precision geometry information of a part of points is retained.

In a process of quantization, there may be a plurality of points that completely coincide at a same position after the quantization.

In the foregoing case, optionally, the quantizing the geometry information of the target three-dimensional mesh, to obtain the first information includes:

The encoder side determines the information about the supplementary point based on the geometry information of the target three-dimensional mesh and the first-precision geometry information.

In other words, after low-precision geometry information of all vertices is obtained, points with duplicate low-precision geometry information are used as supplementary points and encoded separately. Geometry information of a supplementary point may also be divided into two parts: low-precision geometry information and high-precision geometry information. Based on a requirement of an application on compression distortion, all supplementary points or only a part of the supplementary points may be retained. The high-precision geometry information of the supplementary point may also be further quantified, or only high-precision geometry information of a part of points may be retained.

It should be noted that, after the geometry information of the target three-dimensional mesh is quantized to obtain the first information, the first information needs to be encoded to obtain a final bitstream.

Optionally, the encoding the first information, to obtain the first bitstream includes:

The encoder side processes the first information, to obtain second information, where the second information includes at least one of a occupancy map and a geometry map; and

encodes the second information, to obtain the first bitstream.

It should be noted that, because types of information included in the first information are different, when the first information is processed, different types of information are separately processed, and an implementation process of obtaining the first bitstream is described below from perspectives of different information.

1. The first information includes the first-precision geometry information.

Optionally, in a case that the first information includes the first-precision geometry information, the processing the first information, to obtain second information includes:

The encoder side performs three-dimensional patch division on the first-precision geometry information.

The encoder side performs two-dimensional projection on a three-dimensional patch obtained through division, to obtain a two-dimensional patch.

The encoder side packs the two-dimensional patch, to obtain two-dimensional image information.

The encoder side obtains a first-precision occupancy map and a first-precision geometry map based on the two-dimensional image information.

It should be noted that, in this case, patch (Patch) division is mainly performed on the low-precision geometry information, to obtain a plurality of three-dimensional patches. A specific implementation of this step is as follows: The encoder side determines a projection plane of each vertex included in the first-precision geometry information. The encoder side performs, based on the projection plane, patch division on vertices included in the first-precision geometry information. The encoder side performs clustering on the vertices included in the first-precision geometry information, to obtain each patch through the division. In other words, a process of the patch division mainly includes: First, a normal vector of each vertex is estimated, and a candidate projection plane with a smallest angle between a plane normal vector and the vertex normal vector is selected as a projection plane of the vertex. Then, based on the projection plane, vertices are initially divided, and vertices that are on a same projection plane and that are connected form a patch. Finally, a fine division algorithm is used to optimize a clustering result, to obtain a final three-dimensional patch (3-dimension patch, 3D patch).

A specific implementation of a process of obtaining the three-dimensional patch based on the first-precision geometry information is described in detail as follows.

A normal vector of each point is first estimated. A tangent plane and a normal corresponding to the tangent plane are defined based on a nearest neighboring vertex of each point at a predefined search distance. A K-D tree is used to separate data, a neighboring point is found in a vicinity of a point of $p_i$, and a center of gravity $c = \bar{p}$ of a set is used to define a normal. A calculation method for the center of gravity c is as follows:

$$\text{Formula 32: } c = \bar{p} = \frac{1}{m} \sum_{i=1}^{m} p_i.$$

A vertex normal vector is estimated using a feature decomposition method, and a calculation process is shown in Formula 33:

$$\text{Formula 33: } \sum_{i=1}^{m} (p_i - \bar{p})(p_i - \bar{p})^T.$$

In an initial division stage, a projection plane of each vertex is preliminarily selected. An estimated value of the vertex normal vector is set to $\bar{n}_{p_i}$, a normal vector of the candidate projection plane is $\bar{n}_{p_{idx}}$, a plane with a normal vector direction closest to a normal vector direction of the vertex is selected as a projection plane of the vertex, and a calculation process of plane selection is shown in Formula 34:

$$\text{Formula 34: } \max_{p_{idx}} \{ \vec{n}_{p_i} \cdot \vec{n}_{p_{idx}} \}.$$

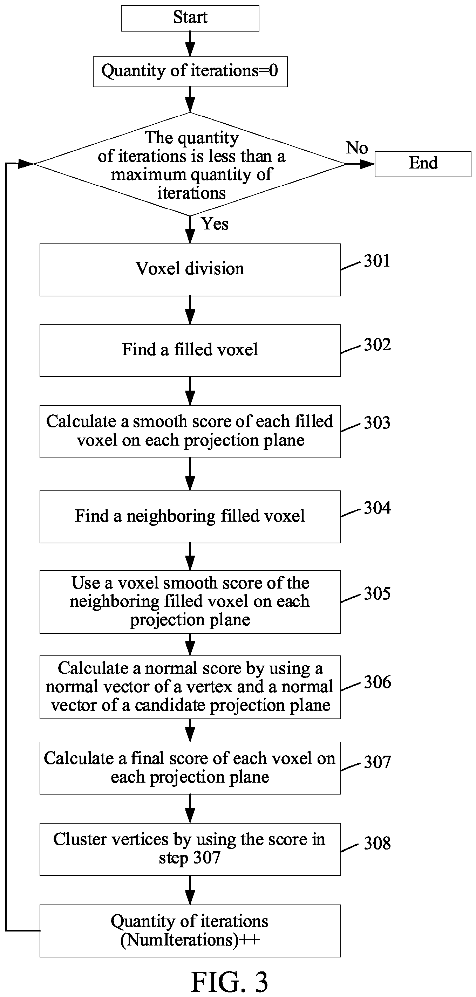

In a fine division process, a mesh-based algorithm may be used to reduce time complexity of the algorithm. A procedure of the mesh-based fine division algorithm is shown in FIG. 3, specifically including:

First, a quantity of iterations (numIteraions) is set to 0, whether the quantity of iterations is less than a maximum quantity of iterations is determined (where, it should be noted that the maximum quantity of iterations may be set based on a usage requirement), and if the quantity of iterations is less than the maximum quantity of iterations, the following process is performed:

Step 301: Divide (x, y, z) geometry coordinate space into voxels.

It should be noted that the geometry coordinate space refers to geometry coordinate space formed based on first-precision geometry information obtained through quantization. For example, for a 10-bit mesh using a voxel size of 8, a quantity of voxels on each set of coordinates is 1024/8=128, and a total quantity of voxels in this coordinate space is 128×128×128.

Step 302: Find a filled voxel, where the filled voxel refers to a voxel including at least one point in a mesh.

Step 303: Calculate a smooth score of each filled voxel on each projection plane, which is denoted as *voxScoreSmooth,* where a voxel smooth score of a voxel on a specific projection plane is a quantity of points aggregated to the projection plane by using an initial segmentation process.

Step 304: Find a neighboring filled voxel by using a KD-Tree partition, which is denoted as *nnFilledVoxels,* that is, a nearest filled voxel of each filled voxel (within a search radius and/or limited to a maximum quantity of neighboring voxels).

Step 305: Calculate a smooth score (*scoreSmooth*) of each filled voxel by using a voxel smooth score of the neighboring filled voxel on each projection plane, where a calculation process is shown in Formula 35:

$$\text{Formula 35: } \text{scoreSmooth}[v][p] = \sum_{j=1}^{\text{size}(\text{nnFilledVoxels}[v])} \text{voxScoreSmooth}[v][p] \ ,$$

where

p is an index of the projection plane, and v is an index of the neighboring filled voxel. All points in one voxel have a same *scoreSmooth.*

Step 306: Calculate a normal score by using the normal vector of the vertex and the normal vector of the candidate projection plane, which is denoted as *scoreNormal,* where a calculation process is shown in Formula 36:

$$\text{Formula 36: } \text{scoreNormal}[i][p] = \text{normal}[i] \cdot \text{orientation}[p],$$

where

p is the index of the projection plane, and i is an index of the vertex.

Step 307: Calculate a final score of each voxel on each projection plane by using *scoreSmooth* and *scoreNormal,* where a calculation process is shown in Formula 37:

$$\text{Formula} \qquad 37: \qquad \text{score}[i][p] = \text{scoreNormal}[i][p] + \frac{\lambda}{\text{size}(\text{nnFilledVoxels}[v])} \times$$

$$\text{scoreSmooth}[v][p], \text{ where}$$

i is the index of the vertex, p is the index of the projection plane, and v is an index of a voxel where a vertex i is located.

Step 308: Cluster vertices by using the score in step 307, to obtain a patch through fine division.

The foregoing process is iterated several times until an accurate patch is obtained.

Further, the encoder side performs two-dimensional projection on a three-dimensional patch obtained through division, to obtain a two-dimensional patch.

It should be noted that this process is to project the 3D patch onto a two-dimensional plane to obtain the two-dimensional patch (2-dimension patch, 2D patch).

The encoder side packs the two-dimensional patch, to obtain two-dimensional image information.

It should be noted that, in this step, patch packing (Patch packing) is implemented. An objective of the patch packing is to arrange 2D patches on a two-dimensional image. A basic principle of the patch packing is to arrange the patches on the two-dimensional image in a non-overlapping manner or arrange pixel-free parts of the patches on the two-dimensional image in a partially overlapping manner. By using algorithms such as priority arrangement and time domain consistent arrangement, the patches are arranged more closely and have time domain consistency, so that encoding performance is improved.

It is assumed that resolution of the two-dimensional image is WxH, and a minimum block size for patch arrangement is defined as T, which specifies a minimum distance between different patches placed on this 2D mesh.

First, the patches are inserted and placed on the 2D mesh according to a non-overlapping principle. Each patch occupies a region including an integer quantity of TxT blocks. In addition, a distance of at least one TxT block is required to exist between neighboring patches. When there is not enough space for a next patch, a height of the image is doubled, and then a patch continues to be placed.

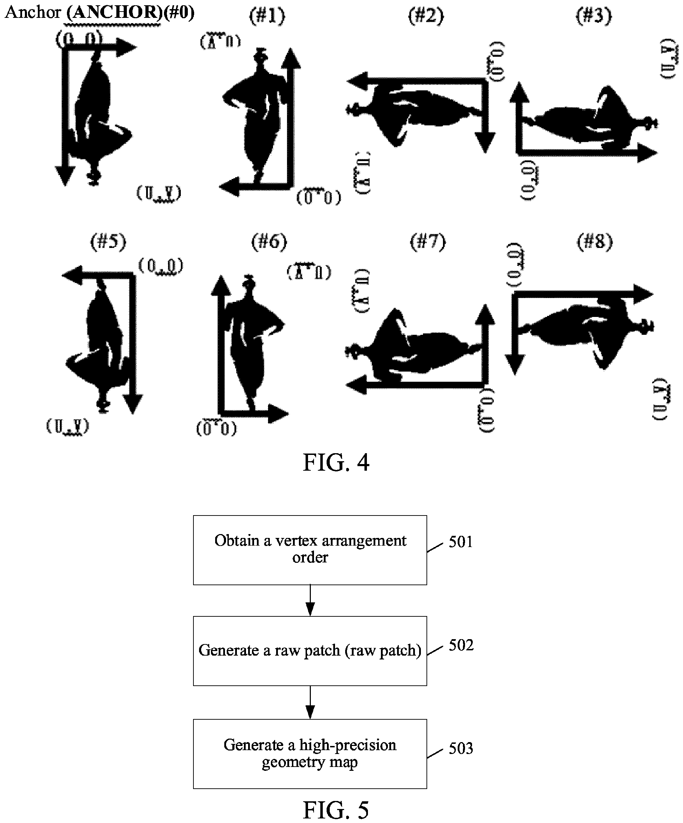

To arrange the patches more closely, a plurality of different arrangement directions may be selected for the patches. For example, eight different arrangement directions may be used. For example, in FIG. 4, a 0-degree direction, a 180-degree direction, a 90-degree direction, a 270-degree direction, and mirror images thereof are included.

To better adapt to an inter-prediction characteristic of a video encoder, a patch arrangement method with time domain consistency is used. In a group of frame (GOF), all patches of a first frame are arranged in descending order. For another frame in the GOF, a time domain consistency algorithm is used to adjust an arrangement order of the patches.

It should be further noted herein that, after two-dimensional image information is obtained, patch information may be obtained based on information in a process of obtaining the two-dimensional image information, and then the patch information may be encoded, to obtain a patch information sub-bitstream.

It should be noted herein that, in the process of obtaining the two-dimensional image information, information about patch division, information about a patch projection plane, and information about a patch packing position need to be recorded. Therefore, the patch information records information about steps in a process of obtaining the two-dimensional image. That is, the patch information includes: the information about the patch division, the information about the patch projection plane, and the information about the patch packing position.

It should be noted that, a process of obtaining a occupancy map is mainly as follows: Patch arrangement information is obtained by using patch packing, a position of a vertex in the two-dimensional image is set to 1, and a rest position is set to 0, to obtain the occupancy map. A process of obtaining a geometry map is mainly as follows: In a process of obtaining a 2D patch through projection, a distance from each vertex to a projection plane is retained. This distance is referred to as depth. For a compression part of a low-precision geometry map, depth values of vertices in a 2D patch are arranged to positions of the vertices in a occupancy map, to obtain the low-precision geometry map.

2. The first information includes the second-precision geometry information.

Optionally, in a case that the first information includes the second-precision geometry information, the processing the first information, to obtain second information includes:

The encoder side obtains an arrangement order of vertices included in the first-precision geometry information.

The encoder side arranges the second-precision geometry information corresponding to the vertices included in the first-precision geometry information in a two-dimensional image, to generate a second-precision geometry map.

It should be noted that, in the high-precision geometry information, an arrangement manner of a raw patch is used, and high-precision geometry information corresponding to vertices in a low-precision geometry map is arranged in the two-dimensional image, to obtain the raw patch, thereby generating a high-precision geometry map. This includes three steps, as shown in FIG. 5, including:

Step 501: Obtain a vertex arrangement order, scan the low-precision geometry map row by row from left to right, and use a scanning order of each vertex as an arrangement order of vertices in the raw patch.

Step 502: Generate the raw patch.

It should be noted that, the raw patch is a rectangular patch formed by arranging three-dimensional coordinates of the vertices row by row as shown in FIG. 4. Based on the vertex arrangement order obtained in the first step, the high-precision geometry information of the vertices is sequentially arranged, to obtain the raw patch with the high-precision geometry information.

Step 503: Place the high-precision geometry information in the two-dimensional image, to generate the high-precision geometry map.

It should be noted that, when a geometry map sub-bitstream is obtained through encoding, the encoder side encodes a first-precision geometry map and a second-precision geometry map, to obtain the geometry map sub-bitstream.

3. The first information includes the information about the supplementary point.

Optionally, in a case that the first information includes the information about the supplementary point, the processing the first information, to obtain second information includes:

The encoder side arranges third-precision geometry information of the supplementary point into a first original patch.

The encoder side arranges fourth-precision geometry information of the supplementary point into a second original patch in a same arrangement order as that of the first original patch.

The encoder side compresses the first original patch and the second original patch, to obtain a geometry map of the supplementary point.

It should be noted that, in this embodiment of this application, a low-precision part and a high-precision part that are obtained by dividing geometry information of the supplementary point are separately encoded. First, low-precision geometry information of the supplementary points is arranged into a low-precision raw patch of the supplementary point in any order. Then, the high-precision geometry information is arranged into a high-precision raw patch of the supplementary point in a same order as that of the low-precision raw patch of the supplementary point. Finally, a plurality of compression methods may be used to compress the low-precision raw patch and the high-precision raw patch of the supplementary point. In one method, values in the raw patch are encoded in a manner such as run-length encoding or entropy encoding. In another method, the low-precision raw patch of the supplementary point is added to a blank region in the low-precision geometry map, and the high-precision raw patch of the supplementary point is added to a blank region in the high-precision geometry map, to obtain the geometry map of the supplementary point.

Optionally, the determining a second bitstream based on connection information corresponding to a first reconstructed mesh includes:

The encoder side determines to-be-sorted vertices in a first spatial range based on a spatial angle of neighboring triangular patches in the first reconstructed mesh, where the first spatial range is a spatial range in which a target vertex of a to-be-encoded triangle in the first reconstructed mesh is located, and the to-be-sorted vertices include the target vertex.

The encoder side sorts the to-be-sorted vertices, to obtain sorting information of the target vertex.

The encoder side obtains encoding information of the to-be-encoded triangle based on encoding information corresponding to the sorting information of the target vertex.

The encoder side updates an edge set based on a first preset rule.

The encoder side redetermines a to-be-encoded triangle based on an updated edge set until encoding information of all to-be-encoded triangles in the first reconstructed mesh is obtained.

The encoder side encodes the encoding information of all the to-be-encoded triangles, to obtain the second bitstream, where

the first preset rule includes: adding two edges other than a first edge of the to-be-encoded triangle to the edge set, and removing the first edge from the edge set.

In this embodiment, the encoder side first encodes geometry information based on a target three-dimensional mesh, then reconstructs the geometry information, performs mesh reconstruction using encoding information of reconstructed geometry information, and then obtains connection information based on the first reconstructed mesh. This can ensure that the obtained connection information is more accurate.

The reconstructed geometry information includes index information of vertices in the target three-dimensional mesh.

In this embodiment of this application, a three-dimensional network may be divided into at least one triangular patch, and each triangular patch includes at least one triangle.

Based on a spatial angle of neighboring triangular patches in the three-dimensional mesh, a part of vertices in the first spatial range may be screened out, and a part of remaining vertices may be considered as to-be-sorted vertices.

Optionally, the first spatial range includes:

a spatial range between a first sphere and a second sphere.

The first sphere and the second sphere have a same spherical center, a radius of the first sphere and a radius of the second sphere are different, and the spherical center is a target position in the first edge of the to-be-encoded triangle, for example, the spherical center is a midpoint of the first edge of the to-be-encoded triangle.

In this embodiment, the to-be-sorted vertices are sorted according to a preset sorting criterion. For example, the sorting criterion may be sorting based on a distance between a vertex and the midpoint of the first edge of the to-be-encoded triangle, or the sorting criterion may be sorting based on a size of a radius of a circumscribed circle of a triangle formed by the vertex and the first edge. Certainly, the sorting criterion may be another criterion, which is not particularly limited herein.

A vertex in the first spatial range is further deleted based on the spatial angle of the neighboring triangular patches, so that a quantity of the to-be-sorted vertices is reduced, that is, bit information used for sorting information of a target vertex can be reduced.

Optionally, when a target condition is satisfied, the encoder side encodes the sorting information of the target vertex, to obtain the encoding information, and when the target condition is not satisfied, encodes an index of the target vertex, to obtain the encoding information. For example, the target condition is that the quantity of the to-be-sorted vertices in the first spatial range is less than a preset threshold, and/or a sorting sequence number of the target vertex is less than a preset numerical value. Because the quantity of the to-be-sorted vertices in the first spatial range is small or the sorting sequence number of the target vertex is small, the encoding information corresponding to the sorting information occupies a small quantity of bits, and in this case, encoding the sorting information of the target vertex can effectively reduce a quantity of encoding bits. In a case that the quantity of the to-be-sorted vertices is large or the sorting sequence number of the target vertex is large, encoding the index of the target vertex can effectively reduce the quantity of encoding bits compared with encoding the sorting information.

In this embodiment, after obtaining encoding information of an encoded triangle, the encoder side updates the edge set based on the first preset rule. Based on the updated edge set, the encoder side redetermines a to-be-encoded triangle until encoding information of all triangles in the three-dimensional mesh is obtained. The encoding information of all the triangles in the first reconstructed mesh is encoded, to obtain the second bitstream.

The first preset rule includes: adding the two edges other than the first edge of the to-be-encoded triangle to the edge set, and removing the first edge from the edge set.

In this embodiment of this application, based on the spatial angle of the neighboring triangular patches in the three-dimensional mesh, the part of vertices are excluded in the first spatial range, and the to-be-sorted vertices are determined based on the excluded vertices, that is, the quantity of to-be-sorted vertices is reduced. In this way, when the sorting information of the target vertex is encoded, the quantity of bits occupied by the encoding information can be further reduced, and encoding efficiency can be effectively improved.

Optionally, before the determining to-be-sorted vertices in a first spatial range based on a spatial angle of neighboring triangular patches in the first reconstructed mesh, the method includes:

The encoder side selects a first edge from an edge set corresponding to the first reconstructed mesh, where the edge set is a set of at least one edge of an encoded triangle in the first reconstructed mesh.

The encoder side determines the to-be-encoded triangle based on the first edge and vertices corresponding to the first edge, where the target vertex of the to-be-encoded triangle is a vertex other than two vertices connected to the first edge among the vertices corresponding to the first edge, and the target vertex may also be described as an opposite vertex of the first edge.

Optionally, the determining to-be-sorted vertices in a first spatial range based on a spatial angle of neighboring triangular patches in the first reconstructed mesh includes:

In a case that the to-be-encoded triangle is a triangle other than a preset category triangle, the encoder side determines the to-be-sorted vertices in the first spatial range based on the spatial angle of the neighboring triangular patches.

Optionally, the preset category triangle includes at least one of the following:

a triangle whose angle with the encoded triangle is smaller than a preset angle; and

a triangle in which two vertices coincide or three vertices are collinear, where, specifically, two vertices in one triangle coincide or three vertices in one triangle are collinear.

Optionally, the method further includes:

In a case that the to-be-encoded triangle is a preset category triangle, the encoder side obtains the encoding information of the to-be-encoded triangle based on encoding information corresponding to target vertex information of the to-be-encoded triangle.

For example, when the to-be-encoded triangle is the preset category triangle, the index of the target vertex of the to-be-encoded triangle is directly encoded, and the encoding information of the to-be-encoded triangle is obtained based on encoding information corresponding to the index of the target vertex.

In this embodiment of this application, when an index of a vertex is encoded, a binary representation may be directly used or an encoding algorithm such as Huffman may be used for encoding, and an encoding method is not specifically limited herein.

Optionally, the determining to-be-sorted vertices in a first spatial range based on a spatial angle of neighboring triangular patches in the first reconstructed mesh includes:

The encoder side excludes all vertices of a first target triangle from vertices in the first spatial range, to obtain remaining vertices.

The encoder side determines the to-be-sorted vertices in the first spatial range based on the remaining vertices, where

the first target triangle is a triangle whose angle with a neighboring encoded triangle is less than an angle threshold, and one edge of the first target triangle is the same as the first edge of the to-be-encoded triangle.

Optionally, the encoding information of the to-be-encoded triangle further includes: encoding information of the angle threshold.

The angle threshold is encoded, so that a decoder side can obtain the angle threshold based on the encoded information, and determines the to-be-sorted vertices in the first spatial range based on the angle threshold. In this manner, the encoder side may flexibly set the angle threshold.

Certainly, a fixed angle threshold may be pre-agreed, and the encoder side and the decoder side determine the to-be-sorted vertices in the first spatial range based on the pre-agreed angle threshold, and the encoder side does not need to encode the angle threshold.

Optionally, the method further includes:

The encoder side encodes target vertex information of a to-be-encoded triangle in a second spatial range, to obtain encoded information of the to-be-encoded triangle, where the second spatial range is a range other than the first spatial range in the first reconstructed mesh.

Optionally, the encoding information of the to-be-encoded triangle further includes encoding information of the first spatial range.

For example, the radius of the first sphere and the radius of the second sphere are encoded, and the first spatial range may be flexibly set in this implementation.

Certainly, the encoder side and the decoder side may pre-determine a size of the first spatial range. In this manner, the encoder side does not need to encode the first spatial range.

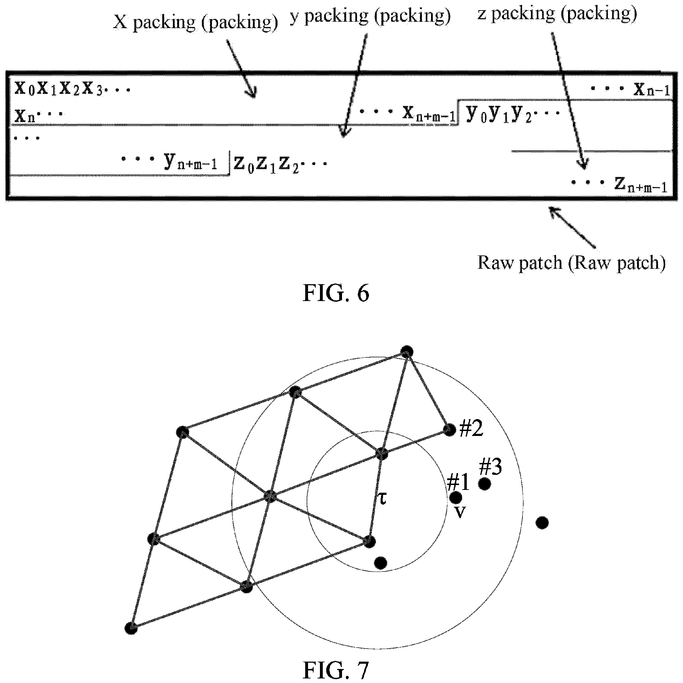

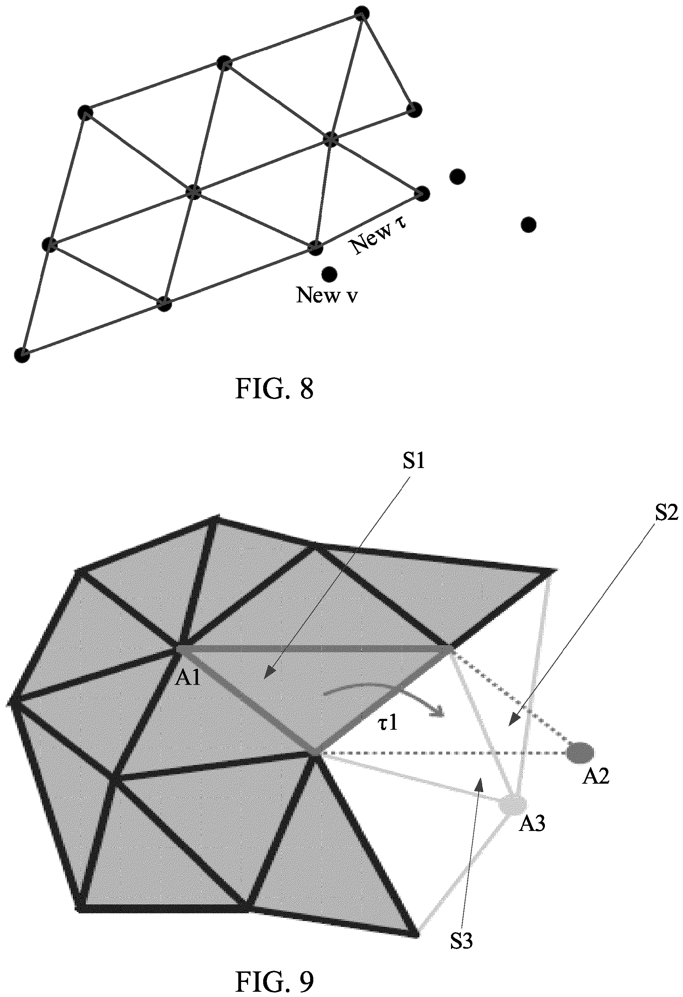

In a specific embodiment of this application, the input three-dimensional mesh is divided into one or more patches at the encoder side, an initial triangle is selected in each patch, and the three-dimensional mesh is the first reconstructed mesh. A vertex index of the initial triangle is encoded and an edge of the initial triangle is put into a set of edges (for example, the edge set). A specific edge in the edge set is selected and an opposite vertex of the edge is determined, and a triangle formed by the edge and the opposite vertex is the to-be-encoded triangle. For example, an edge selected for each iteration may be denoted as $\tau$, an opposite vertex of the edge is denoted as v, and a to-be-encoded triangle neighboring to the edge is encoded. As shown in FIG. 7 and FIG. 8, a process of encoding a connectivity relationship may specifically include the following.

(1) In a case that a preset condition is satisfied, a vertex index of the triangle may be directly encoded, or the triangle may be encoded in another manner. The preset condition may be that the to-be-encoded triangle belongs to several special triangles. For example, the to-be-encoded triangle belongs to a degenerate triangle (where two points coincide or three points are collinear) or an angle between the triangle and an encoded triangle is less than a specific angle. Alternatively, the preset condition may be that q quantity of vertices in the first spatial range is greater than a preset quantity. Alternatively, the preset condition may be that a target vertex is located outside the second spatial range, such as in the second spatial range. Alternatively, the preset condition may be that a sorting sequence number of a target vertex among the vertices in the first spatial range is greater than or equal to a preset value. The preset condition may be flexibly set based on a requirement. Two edges of the to-be-encoded triangle other than the edge $\tau$ are added to the edge set, and the edge $\tau$ is removed from the set. Then, an other edge of the to-be-encoded triangle (an edge other than the edge $\tau$) is taken out of the edge set according to a specific criterion, and a triangle neighboring to the edge continues to be encoded. For example, a next edge $\tau$ may be selected in an access order.

(2) In a case that the preset condition is not satisfied, a spatial range (for example, the first spatial range) in which the opposite vertex v of the edge is located is determined and the spatial range is encoded. All vertices in the spatial range in a patch are traversed, all vertices of a new triangle that is formed with the edge $\tau$ and whose angle with a neighboring encoded triangle is less than a specific angle are screened out, and a value of the angle is encoded.

The spatial range may be determined using geometry characteristics or a spatial angle of neighboring triangular patches or another criterion. For example, the spatial range may be a part that uses a midpoint of the edge $\tau$ as a center of a sphere and that is between two concentric spheres with a combination $\{R_{min}, R_{max}\}$ of a minimum radius $R_{min}$ and a maximum radius $R_{max}$, and the combination $\{R_{min}, R_{max}\}$ is encoded.

Optionally, the value of the angle may be further encoded.

(3) All the vertices in the spatial range are traversed and the vertices are sorted according to a specific sorting criterion. For example, the sorting criterion may be a distance from the vertex v to the midpoint of the edge $\tau$; or a radius of a circumscribed circle of a triangle formed by the vertex and the edge $\tau$. A sequence number of the opposite vertex v in an order is encoded.

(4) Two edges of a newly encoded triangle other than an edge $\tau$ are added to the edge set, and the edge $\tau$ is removed from the edge set. Then, an other edge of the newly encoded triangle is taken out of the set according to a specific criterion, and a triangle neighboring to the edge continues to be encoded.

The encoding process is iterated for each patch of the three-dimensional mesh until triangles in each patch are encoded. If the edge set is empty but an unencoded triangle exists, an initial triangle is selected from remaining unencoded triangles, and the encoding process is cyclically performed.

Optionally, that the encoder side determines a third bitstream based on target information and an attribute encoding manner includes:

In a case that the attribute encoding manner is a first attribute encoding manner, the encoder side determines the third bitstream based on the attribute information corresponding to the first reconstructed mesh.

In a case that the attribute encoding manner is a second attribute encoding manner or a third attribute encoding manner, the encoder side determines the third bitstream based on the target three-dimensional mesh and the target texture map corresponding to the target three-dimensional mesh.

In this embodiment, as described above, the attribute encoding manner may be represented by a state identifier, and the state identifier may be understood as a customized switch identifier. It should be understood that the first reconstructed mesh is a three-dimensional mesh obtained by performing lossy compression on geometry information of the target three-dimensional mesh and then reconstructing geometry information obtained through the lossy compression.

When the state identifier is used to represent the first attribute encoding manner, it means that, in a process of the lossy compression on the geometry information of the target three-dimensional mesh, there is no deviation in a correspondence between texture coordinates corresponding to vertices in the target three-dimensional mesh and positions of the vertices in a texture map corresponding to the target three-dimensional mesh. In this case, attribute information corresponding to the first reconstructed mesh is encoded, to obtain the third bitstream.

When the state identifier is used to represent the second attribute encoding manner, it means that, in a process of the lossy compression on the geometry information of the target three-dimensional mesh, there may be a large deviation in a correspondence between texture coordinates corresponding to vertices in the target three-dimensional mesh and positions of the vertices in a texture map corresponding to the target three-dimensional mesh. In this way, the third bitstream can be determined based on the target three-dimensional mesh and the target texture map corresponding to the target three-dimensional mesh, and the third bitstream includes a first sub-bitstream and a second sub-bitstream. The first sub-bitstream is a sub-bitstream obtained by encoding reconstructed texture coordinate information in the attribute information, and the second sub-bitstream is a sub-bitstream obtained by encoding a reconstructed texture map in the attribute information.

When the state identifier is used to represent the third attribute encoding manner, it means that, in a process of the lossy compression on the geometry information of the target three-dimensional mesh, there may be a large deviation in a correspondence between texture coordinates corresponding to vertices in the target three-dimensional mesh and positions of the vertices in a texture map corresponding to the target three-dimensional mesh. In this way, the third bitstream can be determined based on the target three-dimensional mesh and the target texture map corresponding to the target three-dimensional mesh. In addition, in the foregoing encoding manner, only a reconstructed texture map is encoded, and reconstructed texture coordinate information is not encoded, to save a code rate.

It should be understood that the reconstructed texture coordinate information in the foregoing embodiments and subsequent embodiments refers to regenerated texture coordinate information, and the reconstructed texture map refers to a regenerated texture map.

In this embodiment, the state identifier is pre-set through customization, and the attribute encoding manner is represented using the state identifier, to encode the attribute information corresponding to the target three-dimensional mesh, thereby achieving an objective of saving an encoding code rate.

Optionally, the attribute information includes texture coordinate information and a texture map, the texture coordinate information is used for representing texture coordinates corresponding to vertices in the target three-dimensional mesh, and the determining the third bitstream based on the attribute information corresponding to the first reconstructed mesh includes:

The encoder side performs entropy encoding on a first target coordinate difference, to obtain a first sub-bitstream, where the first target coordinate difference is obtained based on the texture coordinate information.

The encoder side encodes the texture map by using a video encoder, to obtain a second sub-bitstream.

The encoder side obtains the third bitstream by combining the first sub-bitstream and the second sub-bitstream.

It should be understood that the attribute information includes the texture coordinate information and the texture map, and the texture coordinate information includes texture coordinates, that is, UV coordinates corresponding to each vertex, where the UV coordinates are used to represent a texture color value of the corresponding vertex.

In this embodiment, after encoded geometry information is reconstructed, and the first reconstructed mesh is obtained based on the reconstructed geometry information and a simplified mesh, whether UV coordinates corresponding to each vertex in the first reconstructed mesh are consistent with UV coordinates corresponding to the vertex in the simplified mesh is determined. If the UV coordinates corresponding to the vertex in the first reconstructed mesh are inconsistent with the UV coordinates corresponding to the vertex in the simplified mesh, an order of UV coordinates in the simplified mesh is adjusted, so that the UV coordinates in the simplified mesh are consistent with an order of UV coordinates in the first reconstructed mesh.

For a specific technical solution on how to determine a coordinate difference, refer to subsequent embodiments.

After a first target coordinate difference is determined, entropy encoding is performed on the first target coordinate difference, to form a UV coordinate sub-bitstream, where the UV coordinate sub-bitstream is also referred to as the first sub-bitstream.

In this embodiment, after the texture map corresponding to the first reconstructed mesh is obtained, the texture map may be directly encoded through the video encoder, to form a texture map sub-bitstream, where the texture map sub-bitstream is also referred to as the second sub-bitstream. The video encoder includes, but is not limited to, a high efficiency video coding (High Efficiency Video Coding, HEVC) encoder and a versatile video coding (Versatile Video Coding, VVC) encoder.

After the first sub-bitstream and the second sub-bitstream are obtained, the first sub-bitstream and the second sub-bitstream are multiplexed, to form the third bitstream.

In this embodiment, the entropy coding is performed on the first target coordinate difference and the texture map is encoded through the video encoder, to form the third bitstream, so that the attribute information is effectively compressed, thereby reducing an amount of data.

Optionally, before the performing entropy encoding on a first target coordinate difference, to obtain a first sub-bitstream, the method includes:

The encoder side selects a second edge from an edge set corresponding to the first reconstructed mesh, where the edge set is a set of at least one edge of an encoded triangle represented using the texture coordinate information.

The encoder side determines a predicted triangle based on the second edge and vertices corresponding to the second edge.

The encoder side determines a vertex of the second edge other than two vertices connected to the second edge among vertices corresponding to the predicted triangle as a predicted vertex.

The encoder side determines a coordinate difference between the predicted vertex and an actual vertex as the first target coordinate difference, where the actual vertex is a vertex of the second edge other than the two vertices connected to the second edge among vertices corresponding to a to-be-encoded triangle.

For ease of understanding, refer to FIG. 9. In a scene shown in FIG. 9, $\tau1$ represents the second edge, and A1 represents a vertex corresponding to the second edge. A triangle S1 may be determined based on the second edge and the vertex corresponding to the second edge, and a predicted triangle S2 may be determined using a parallelogram prediction method for the triangle S1. Further, the vertex, that is, a point A2 shown in FIG. 9, of the second edge other than the two vertices connected to the second edge among the vertices corresponding to the predicted triangle is determined as the predicted vertex.

The actual vertex in the first reconstructed mesh is obtained, the actual vertex is the vertex of the second edge other than the two vertices connected to the second edge among the vertices corresponding to the to-be-encoded triangle, the to-be-encoded triangle is S3 shown in FIG. 9, the actual vertex is a point A3 shown in FIG. 9, a coordinate difference between the predicted vertex and the actual vertex is calculated, and the coordinate difference is determined as the first target coordinate difference.

Optionally, that the encoder side determines the third bitstream based on the target three-dimensional mesh and the target texture map corresponding to the target three-dimensional mesh includes:

In a case that the attribute encoding manner is the second attribute encoding manner, the encoder side performs surface spectral processing on the target three-dimensional mesh, to obtain the reconstructed texture coordinate information.

The encoder side performs rasterization processing on the target texture map by using the target three-dimensional mesh, the target texture map, and the reconstructed texture coordinate information, to obtain the reconstructed texture map.

The encoder side performs entropy encoding on a second target coordinate difference, to obtain a first sub-bitstream, where the second target coordinate difference is obtained based on the reconstructed texture coordinate information.

The encoder side encodes the reconstructed texture map by using a video encoder, to obtain a second sub-bitstream.

The encoder side obtains the third bitstream based on the first sub-bitstream and the second sub-bitstream.

Optionally, the reconstructed texture coordinate information may be obtained using an isometric chart (isometric chart, ISO-chart) algorithm. In the following, a specific implementation in which the surface spectral processing is performed on the target three-dimensional mesh is described in detail.

1. Surface spectral analysis

The surface spectral analysis is based on an isometric feature mapping (isometric feature mapping, IsoMap) dimensionality reduction method to parametrize the target three-dimensional mesh. Specifically, the surface spectral analysis includes the following steps:

(a) Calculate a symmetric matrix $D_N$ of a square of a geodesic distance between surface points.

(b) Bi-centralize and normalize $D_N$ to obtain $B_N$, where a calculation process is as follows:

$$\text{Formula 38: } B_N = \frac{1}{2} J_N D_N J_N,$$

where

$J_N = I - \frac{1}{N} 1 1^T$, I is an N-dimensional identity matrix, and 1 is an identity vector of a length N.

(c) Calculate a feature value $\lambda i$ of $B_N$ and a corresponding feature vector $\vec{v}$, where i=1, 2, ..., N.

(d) For each point i of an original surface, an embedding of the point i in new space is an N-dimensional vector $\vec{y}$, and a calculation process of a $j^{th}$ element of the point i is as follows:

$$\text{Formula 39: } \vec{y}_i^j = \sqrt{\lambda_j} \cdot \vec{v}_j^i,$$

where j=1, 2, ..., N.

The feature value $\lambda i$ and the corresponding feature vector $\vec{v}i$ form spectral decomposition of a surface shape.

In addition, because mapping of high-dimensional space to low-dimensional space is not equidistant, this parametrization leads to distortion. For each vertex i, geodesic distance distortion (Geodesic Distance Distortion, GDD) of the vertex i under the embedding is defined as follows:

$$\text{Formula 40: } GDD(i) = \sqrt{\frac{1}{N-1} \sum_{j=1}^{N} (||\vec{y}_i - \vec{y}_j|| - d_{geo}(i,j))^2},$$

where

$\vec{y}_i$ is n-dimensional embedding coordinates of the vertex i, and $d_{geo}(i,j)$ is a geodetic distance between the point i and a point j.

When n=2, the surface spectral analysis yields a surface parametrization with a smallest sum of squares of GDDs of all vertices.

2. Stretching optimization

Because three-dimensional space to two-dimensional space is not equidistant, the parametrization leads to distortion. To eliminate a distortion phenomenon, the stretching optimization is needed.

It is assumed that there is a triangle T with two-dimensional texture coordinates $p_1$, $p_2$, $p_3$, where $p_i=(s_i, t_i)$, corresponding three-dimensional coordinates are denoted as $q_1$, $q_2$, $q_3$, and a calculation process of affine mapping S(p) =S(s, t)=q is as follows:

$$\text{Formula 41: } S(p) = (\langle p, p_2, p_3 \rangle q_1 + \langle p, p_3, p_1 \rangle q_2 + \langle p, p_1, p_2 \rangle q_3)/\langle p_1, p_2, p_3 \rangle,$$

where
$\langle a, b, c \rangle$ represents an area of a triangle abc. Because the mapping is affine, a partial derivative of the mapping is constant at (s, t). A calculation process is shown as follows:

$$\text{Formula 42: } S_s = \partial S/\partial s = (q_1(t_2 - t_3) + q_2(t_3 - t_1) + q_3(t_1 - t_2))/(2A);$$

and

$$\text{Formula 43: } S_t = \partial S/\partial t = (q_1(s_3 - s_2) + q_2(s_1 - s_3) + q_3(s_2 - s_1))/(2A),$$

where

$$A = \langle p_1, p_2, p_3 \rangle = ((s_2 - s_1)(t_3 - t_1) - (s_3 - s_1)(t_2 - t_1))/2.$$

Then, larger and smaller singular values of a matrix $[S_s, S_t]$ are obtained through calculation, and a calculation process is as follows:

$$\text{Formula 44: } \gamma_{max} = \sqrt{1/2\left((a+c) + \sqrt{(a-c)^2 + 4b^2}\right)};$$

and

$$\text{Formula 45: } \gamma_{min} = \sqrt{1/2\left((a+c) - \sqrt{(a-c)^2 + 4b^2}\right)},$$

where
$a = S_s \cdot S_s$, $b = S_s \cdot S_t$, and $c = S_t \cdot S_t$. Singular values $\gamma_{max}, \gamma_{min}$ represent maximum and minimum lengths that is, maximum and minimum local "stretches", obtained when a unit length vector is mapped from a two-dimensional texture domain to a three-dimensional surface. Two stretch measures on the triangle T are defined as follows:

$$\text{Formula 46: } L^2(T) = \sqrt{(\gamma_{max}{}^2 + \gamma_{min}{}^2)/2} = \sqrt{(a+c)/2};$$

and

$$\text{Formula 47: } L^\infty(T) = \gamma_{max}.$$

A stretch measure on an entire three-dimensional mesh $M = \{T_i\}$ is defined as follows:

$$\text{Formula 48: } L^2(M) = \sqrt{\sum_{T_i \in M}\left(L^2(T_i)\right)^2 A'(T_i)/\sum_{T_i \in M} A'(T_i)};$$

and

$$\text{Formula 49: } L^\infty(M) = \max_{T_i \in M} L^\infty(T_i),$$

where
$A'(T_i)$ is a surface area of a triangle $T_i$ in the three-dimensional space.
Stretching optimization processing is performed on the target three-dimensional mesh by using the foregoing Formula 48 and Formula 49.

3. Surface spectral clustering

Through the surface spectral clustering, a target three-dimensional mesh obtained through the stretching optimization processing is divided into a plurality of charts, and a specific algorithm process is as follows:

(a) Sort, from large to small, feature values and corresponding feature vectors obtained through spectral analysis, that is, $\lambda_1 \geq \lambda_2 \geq ... \geq \lambda_N$.
(b) Obtain first n feature values and feature vectors (n≤10) that maximize $\lambda_n/\lambda_{n+1}$.
(c) For each vertex i in the target three-dimensional mesh, calculate n-dimensional embedding coordinates
$$\vec{y}_i^j = \sqrt{\lambda_j} \cdot \vec{v}_j^i,$$
(j=1, 2, , ..., n) of the vertex i.
(d) For each of n embedding coordinates, find two points with largest coordinates and smallest coordinates respectively, and set the points as 2n representative points.
(e) Remove those representative points whose distance is less than a distance threshold, to yield m≤2n representative points, where, optionally, the distance threshold is 10 times an average edge length of the target three-dimensional mesh.
(f) Perform simultaneous clustering processing around the representative point, to divide the three-dimensional mesh into m charts.

4. Boundary optimization

After a plurality of charts are obtained, a graph cut algorithm is used to optimize a boundary between the charts. Specifically, one of neighboring charts is defined as a chart A and the other chart is defined as a chart B, and there is an intermediate region C between the two charts. A capacity (capacity) between two neighboring triangles $f_i$ and $f_j$ in the intermediate region C is calculated, then a maximum flow algorithm and/or minimum cut algorithm are/is used to find a boundary edge based on the capacity, and whether the neighboring triangles $f_i$ and $f_j$ are divided into the chart A or the chart B is determined, thereby creating a new boundary between the chart A and the chart B.
The capacity is defined as follows:

$$\text{Formula 50: } c(f_i, f_j) = \alpha c_{ang}(f_i, f_j) + (1 - \alpha)c_{distort}(f_i, f_j).$$

In the following, a calculation process of Formula 50 is described in detail:

$$\text{Formula 51: } c_{ang}(f_i, f_j) = \left(1 + \frac{d_{ang}(f_i, f_j)}{avg(d_{ang})}\right)^{-1},$$

where
$d_{ang}(f_i, f_j) = 1 - \cos\alpha_{ij}$, $\alpha_{ij}$ is an angle between normals of the triangles $f_i$ and fj, and $avg(d_{ang})$ is an average angular distance between neighboring triangles.

$$\text{Formula 52: } c_{distort}(f_i, f_j) = \frac{d_{distort}(f_i, f_j)}{avg(d_{distort})};$$

and

$$\text{Formula 53: } d_{distort}(f_i, f_j) = |GDD_A(f_i) - GDD_B(f_i)| + |GDD_A(f_j) - GDD_B(f_j)|,$$

where
$GDD_A(f_i)$ and $GDD_B(f_i)$ are GDDs embedded through induction of the chart A and the chart B for the triangle $f_i$ respectively, $avg(d_{distort})$ is an average of $d_{distort}(f_i, f_j)$ on all neighboring triangle pairs, and $\alpha$ is a weight parameter.
Finally, charts generated in the foregoing process are packed into the two-dimensional texture domain by using a chart packing algorithm, to generate the reconstructed texture coordinate information.
In the following, a specific implementation in which the rasterization processing is performed on the target texture map is described in detail.

(a) First, calculate a size of a bounding box (bounding box) corresponding to the target three-dimensional mesh, to obtain a maximum search distance.

(b) Calculate a boundary edge of a second reconstructed mesh in texture space.

(c) Divide faces in the target three-dimensional mesh into uniform sub-grids (grids).

(d) Traverse all faces in the second reconstructed mesh, and perform rasterization processing on the target texture map, to obtain the reconstructed texture map.

The following specifically describes a process in which rasterization processing is performed on the target texture map for one face in the second reconstructed mesh.

A size of a bounding box of a current face (any one surface in the second reconstructed mesh) in the texture space, a center point of each pixel within a range of the bounding box is sampled out, to obtain a pixel position of the current face in the target texture map, and optionally, the pixel position is a position of three pixel points.

Three pixel points that are in the target three-dimensional mesh and that are closest to the foregoing three pixel points are searched within the maximum search distance, to obtain a surface that is in the target three-dimensional mesh and that corresponds to the current face, where the surface is referred to as a nearest face.

Corresponding pixel positions of three pixel points of the nearest face in the target texture map and an RGBA value corresponding to each pixel position is calculated, where the RGBA value refers to color space of red (Red), green (Green), blue (Blue), and alpha (Alpha) corresponding to the pixel point. The RGBA value is assigned to pixel positions corresponding to the three pixel points in the reconstructed texture map.

Optionally, an alpha value of a pixel point on an edge of a boundary may be converted to 255 to smooth the boundary. Optionally, the reconstructed texture map may be filled using a pull push filling algorithm, to save a bitstream.

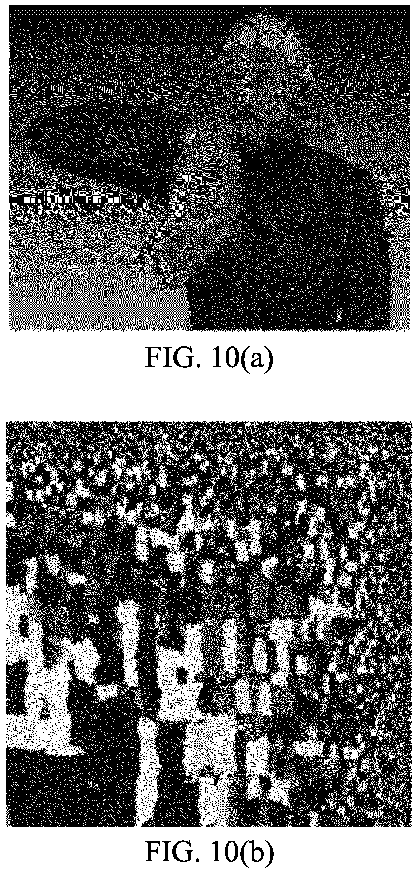

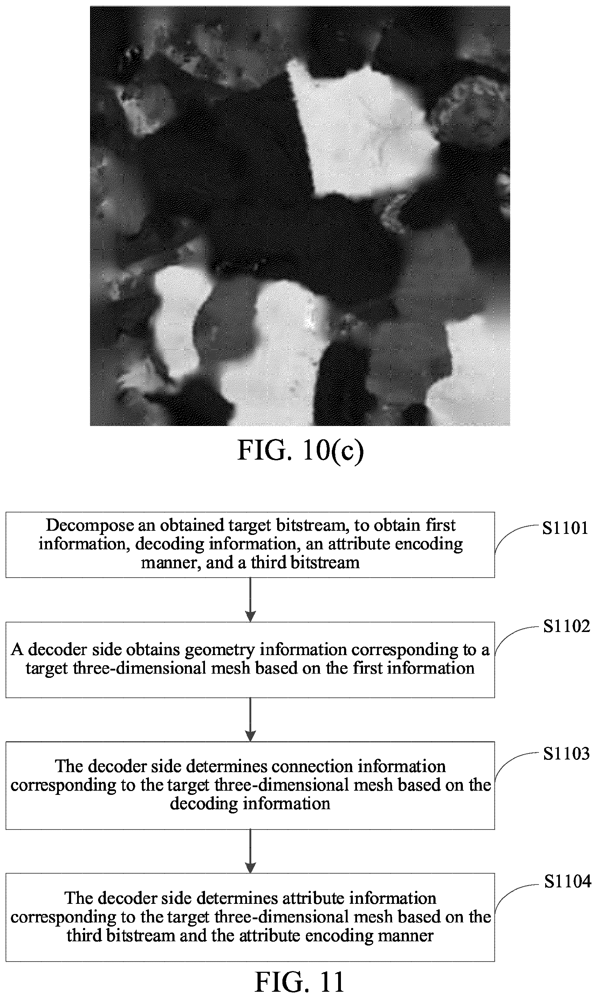

For convenience of understanding, refer to FIG. 10 (a) to FIG. 10 (c). FIG. 10 (a) is an image represented using the target three-dimensional mesh, FIG. 10 (b) is an effect diagram of the target texture map, and FIG. 10 (c) is an effect diagram of the reconstructed texture map.

In this embodiment, after the reconstructed texture coordinate information is obtained, whether the UV coordinates corresponding to each vertex in the target three-dimensional mesh are consistent with reconstructed UV coordinates that correspond to the vertex and that are represented using the reconstructed texture coordinate information is determined. If the UV coordinates corresponding to each vertex in the target three-dimensional mesh are consistent with reconstructed UV coordinates that correspond to the vertex and that are represented using the reconstructed texture coordinate information, the UV coordinates corresponding to the vertex in the target three-dimensional mesh may be adjusted to be consistent with the reconstructed UV coordinates corresponding to the vertex.

A specific implementation in which the second target coordinate difference is determined is the same as the implementation in which the first coordinate difference is determined, and details are not repeated herein.

After the second target coordinate difference is determined, entropy encoding is performed on the second target coordinate difference, to form a UV coordinate sub-bitstream, where the UV coordinate sub-bitstream is also referred to as the first sub-bitstream. In this embodiment, after the reconstructed texture map corresponding to the first reconstructed mesh is obtained, the reconstructed texture map may be directly encoded through the video encoder, to form a texture map sub-bitstream, where the texture map sub-bitstream is also referred to as the second sub-bitstream. The first sub-bitstream and the second sub-bitstream are multiplexed, to form the third bitstream.

Optionally, that the encoder side determines the third bitstream based on the target three-dimensional mesh and the target texture map corresponding to the target three-dimensional mesh includes:

In a case that the attribute encoding manner is the third attribute encoding manner, the encoder side performs surface spectral processing on the target three-dimensional mesh, to obtain the reconstructed texture coordinate information.

The encoder side performs rasterization processing on the target texture map by using the target three-dimensional mesh, the target texture map, and the reconstructed texture coordinate information, to obtain the reconstructed texture map.

The encoder side encodes the reconstructed texture map by using a video encoder, to obtain the third bitstream.

As described above, in the case that the state identifier represents the third attribute encoding manner, only the reconstructed texture map is encoded to generate the third bitstream.

In this embodiment, in a case that the attribute encoding manner is the third attribute encoding manner, surface spectral processing is performed on the target three-dimensional mesh, to obtain the reconstructed texture coordinate information. It should be understood that a specific implementation in which the surface spectral processing is performed on the target three-dimensional mesh is consistent with the specific implementation of the surface spectral processing mentioned in the foregoing embodiments, and details are not repeated herein.

After the reconstructed texture coordinate information is obtained, the target three-dimensional mesh, the target texture map, and the reconstructed texture coordinate information are used, to perform rasterization processing on the target texture map, to obtain the reconstructed texture map. It should be understood that a specific implementation in which the rasterization processing is performed on the target texture map is consistent with the specific implementation of the rasterization processing mentioned in the foregoing embodiments, and details are not repeated herein.

In this embodiment, because the state identifier represents the third attribute encoding manner, only the reconstructed texture map is encoded using the video encoder, to obtain the third bitstream, thereby saving an encoding code rate.

The decoding method provided in embodiments of this application is described in detail below with reference to the accompanying drawings by using some embodiments and application scenarios thereof.

FIG. 11 is a flowchart of a decoding method according to this application. The decoding method provided in this embodiment includes the following steps.

S1101: A decoder side decomposes an obtained target bitstream, to obtain first information, decoding information, an attribute encoding manner, and a third bitstream.

The target bitstream may be a bitstream obtained by an encoder side by encoding the foregoing target three-dimensional mesh. During decoding, the decoder side decodes geometry information first, and then decodes a connectivity relationship based on the geometry information.

Definitions of the first information and the third bitstream are respectively the same as those of the first information and the third bitstream in the foregoing embodiments, and details are not repeated herein.

As described above, the attribute encoding manner may be represented using a state identifier.

S1102: The decoder side obtains geometry information corresponding to a target three-dimensional mesh based on the first information.

The decoder side performs an inverse quantization operation on the first information, to obtain the target three-dimensional mesh. For a specific technical solution on how to obtain the target three-dimensional mesh, refer to subsequent embodiments.

S1103: The decoder side determines connection information corresponding to the target three-dimensional mesh based on the decoding information.

The decoder side determines each triangle in the target three-dimensional mesh based on the decoding information, to obtain the connection information corresponding to the target three-dimensional mesh. For a specific technical solution on how to determine each triangle in the target three-dimensional mesh based on the decoding information, refer to subsequent embodiments.

S1104: The decoder side determines attribute information corresponding to the target three-dimensional mesh based on the third bitstream and the attribute encoding manner.

The decoder side determines the attribute information corresponding to the target three-dimensional mesh based on the third bitstream and the attribute encoding manner. As described above, the attribute information includes, but is not limited to, a mesh UV coordinate attribute and a texture map. For a specific technical solution on how to determine the attribute information corresponding to the target three-dimensional mesh based on the third bitstream and the attribute encoding manner, refer to subsequent embodiments.

In this embodiment of this application, the obtained target bitstream is decomposed, to obtain the first information, the decoding information, the attribute encoding manner, and the third bitstream. The geometry information corresponding to the target three-dimensional mesh is obtained based on the first information. The connection information corresponding to the target three-dimensional mesh is determined based on the decoding information. The attribute information corresponding to the target three-dimensional mesh is determined based on the third bitstream and the attribute encoding manner. In the foregoing technical solutions, a decoding manner for the third bitstream is determined based on the attribute encoding manner, and correct attribute information is obtained, to avoid a failure in decoding.

The decomposing an obtained target bitstream, to obtain first information includes:

The decoder side obtains a target sub-bitstream based on the obtained target bitstream, where the target sub-bitstream includes: a patch information sub-bitstream, a occupancy map sub-bitstream, and a geometry map sub-bitstream.

The decoder side obtains second information based on the target sub-bitstream, where the second information includes: at least one of a occupancy map and a geometry map.

The decoder side obtains the first information based on the second information.

Optionally, in a case that the first information includes first-precision geometry information, the obtaining the first information based on the second information includes:

The decoder side obtains two-dimensional image information based on a first-precision occupancy map and a first-precision geometry map.

The decoder side obtains a two-dimensional patch based on the two-dimensional image information.

The decoder side performs three-dimensional backprojection on the two-dimensional patch based on patch information corresponding to the patch information sub-bitstream, to obtain a three-dimensional patch.

The decoder side obtains the first-precision geometry information based on the three-dimensional patch.

Optionally, in a case that the first information includes second-precision geometry information, the obtaining the first information based on the second information includes:

The decoder side obtains the second-precision geometry information based on a second-precision geometry map.

Optionally, in a case that the first information includes information about a supplementary point, the obtaining the first information based on the second information includes:

The decoder side determines a first original patch corresponding to third-precision geometry information of the supplementary point and a second original patch corresponding to fourth-precision geometry information of the supplementary point based on a geometry map of the supplementary point.

The decoder side determines the information about the supplementary point based on the first original patch and the second original patch.

It should be noted that, in this embodiment of this application, a low-precision part and a high-precision part that are obtained by dividing geometry information of the supplementary point are separately decoded. First, the geometry map of the supplementary point is decompressed, and various decompression methods may be adopted. In one method, the geometry map is decoded in a manner such as run-length decoding or entropy decoding. In another method, a low-precision raw patch of the supplementary point is taken out of a low-precision geometry map, and a high-precision raw patch of the supplementary point is taken out of a high-precision geometry map. Then, low-precision geometry information of the supplementary point is obtained from the low-precision raw patch of the supplementary point according to a specific order, and high-precision geometry information is obtained from the high-precision raw patch of the supplementary point according to a specific order. It should be noted herein that, the specific order is obtained by the decoder side by parsing a bitstream, that is, an order used by the encoder side to generate the low-precision raw patch of the supplementary point and the high-precision raw patch of the supplementary point and inform the decoder side by using the bitstream.

Optionally, the obtaining geometry information corresponding to a target three-dimensional mesh based on the first information includes:

The decoder side determines, based on first-precision geometry information and a quantization parameter of each component, coordinates of each vertex in the first-precision geometry information.

The decoder side determines geometry information corresponding to the target three-dimensional mesh based on the coordinates of each vertex in the target three-dimensional mesh and second-precision geometry information.

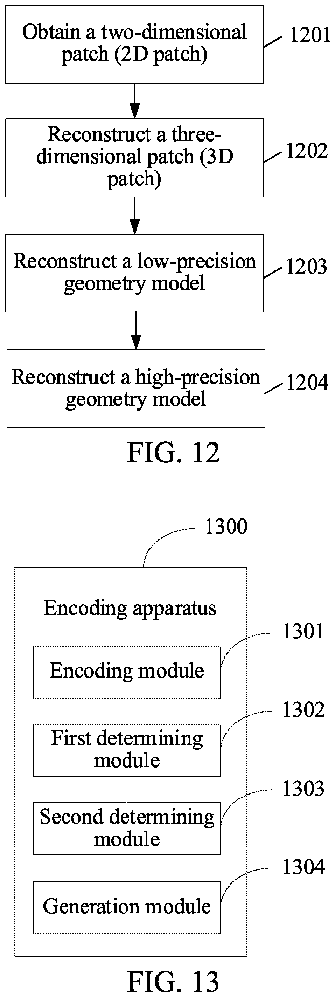

It should be noted that, a geometry information reconstruction process in this embodiment of this application is a process of reconstructing a three-dimensional geometry model by using information such as patch information, a occupancy map, a low-precision geometry map, and a high-precision geometry map. A specific process is shown in FIG. 12, and mainly includes the following four steps.

Step 1201: Obtain a 2D patch.

It should be noted that, obtaining the 2D patch refers to using patch information to segment occupancy information and depth information of the 2D patch from a occupancy map and a geometry map. Patch information includes positions and sizes of a bounding box of each 2D patch in a occupancy map and a low-precision geometry map. Occupancy information and low-precision geometry information of the 2D patch can be directly obtained using patch information, the occupancy map, and the low-precision geometry map. For the high-precision geometry information, a vertex scanning order of the low-precision geometry map is used, and the high-precision geometry information in the high-precision raw patch corresponds to a vertex of the low-precision geometry map, to obtain the high-precision geometry information of the 2D patch. For the geometry information of the supplementary point, the low-precision geometry information and the high-precision geometry information of the supplementary point may be obtained by directly decoding the low-precision raw patch and the high-precision raw patch of the supplementary point.

Step 1202: Reconstruct a 3D patch.

It should be noted that, reconstructing the 3D patch refers to using the occupancy information and the low-precision geometry information in the 2D patch, to reconstruct a vertex in the 2D patch into the low-precision 3D patch. The occupancy information of the 2D patch includes a position of the vertex relative to a coordinate origin in a local coordinate system of a patch projection plane, and the depth information includes a depth value of the vertex in a normal direction of the projection plane. Therefore, the 2D patch can be reconstructed into the low-precision 3D patch in the local coordinate system by using the occupancy information and the depth information.

Step 1203: Reconstruct a low-precision geometry model.

It should be noted that, reconstructing the low-precision geometry model refers to using the reconstructed low-precision 3D patch, to reconstruct the entire low-precision three-dimensional geometry model. The patch information includes a relationship of converting a local coordinate system of the 3D patch to a global coordinate system of the three-dimensional geometry model. The coordinate conversion relationship is used for conversion of all 3D patches to the global coordinate system, so that the low-precision three-dimensional geometry model is obtained. In addition, for the supplementary point, geometry information in the low-precision raw patch is directly used, to obtain a low-precision coordinate value of the supplementary point in the global coordinate system, thereby obtaining the complete low-precision three-dimensional geometry model.

Step 1204: Reconstruct a high-precision geometry model.

Reconstructing the high-precision geometry model refers to a process of reconstructing the high-precision geometry model by using high-precision geometry information based on the low-precision geometry model. In a process of obtaining the 2D patch, the high-precision geometry information corresponds to the low-precision geometry information, and based on high-precision geometry information and low-precision geometry information of a vertex, high-precision three-dimensional coordinates of the vertex may be reconstructed. Based on an application requirement, high-precision three-dimensional coordinates of all vertices may be selected and reconstructed, or high-precision three-dimensional coordinates of a part of vertices may be selected and reconstructed. A calculation process of high-precision three-dimensional coordinates $(x_r, y_r, z_r)$ is shown in Formula 54 to Formula 56:

$$\text{Formula 54: } x_r = f_3(x_l, x_h, QP_x);$$

$$\text{Formula 55: } y_r = f_3(y_l, y_h, QP_y);$$

and

$$\text{Formula 56: } z_r = f_3(z_l, z_h, QP_z),$$

where
a function $f_3$ is a reconstruction function, a calculation process of the reconstruction function corresponds to a calculation process of a quantization function at the encoder side, and there are a plurality of implementations. If a function $f_1$ adopts an implementation in Formula 20 to Formula 25, an implementation of the reconstruction function is shown in Formula 57 to Formula 59:

$$\text{Formula 57: } x_r = x_l * QP_x + x_h;$$

$$\text{Formula 58: } y_r = y_l * QP_y + y_h;$$

and

$$\text{Formula 59: } z_r = z_l * QP_z + z_h.$$

If a function $f_1$ adopts an implementation in Formula 26 to Formula 31, an implementation of the reconstruction function is shown in Formula 60 to Formula 62:

$$\text{Formula 60: } x_r = (x_l \ll \log_2 QP_x)|x_h;$$

$$\text{Formula 62: } y_r = (y_l \ll \log_2 QP_y)|y_h;$$

and

$$\text{Formula 61: } z_r = (z_l \ll \log_2 QP_z)|z_h.$$

Optionally, the obtaining geometry information corresponding to a target three-dimensional mesh based on the first information further includes:
The decoder side determines the geometry information corresponding to the target three-dimensional mesh based on information about a supplementary point and the coordinates of each vertex in the first-precision geometry information.
Optionally,
the information about the supplementary point includes at least one of the following:

an index of a vertex in first-precision geometry information corresponding to the supplementary point;
third-precision geometry information of the supplementary point, where the third-precision geometry information is three-dimensional coordinate information after the supplementary point is quantized; and
fourth-precision geometry information of the supplementary point, where the fourth-precision geometry information is lost three-dimensional coordinate information of the supplementary point in the process of being quantized.

Optionally, the determining connection information corresponding to the target three-dimensional mesh based on the decoding information includes:

In a case that the decoding information includes sorting information of a target vertex, the decoder side determines to-be-sorted vertices in a first spatial range based on a spatial angle of neighboring triangular patches in the target three-dimensional mesh, and sorts the to-be-sorted vertices, where the sorting information is a sequence number of the target vertex in the to-be-sorted vertices in the first spatial range, and the first spatial range is a spatial range in which the target vertex of a to-be-decoded triangle in the target three-dimensional mesh is located.

The decoder side determines the target vertex of the to-be-decoded triangle among the to-be-sorted vertices based on a sorting result of the to-be-sorted vertices and the sorting information of the target vertex.

The decoder side determines the to-be-decoded triangle based on the target vertex and a first edge of the to-be-decoded triangle.

The decoder side updates an edge set based on a second preset rule.

The decoder side redetermines the first edge based on an updated edge set until each to-be-decoded triangle in the target three-dimensional mesh is determined, where

the second preset rule includes: adding two edges other than the first edge of the to-be-decoded triangle to the edge set, and removing the first edge from the edge set.

The vertex information may be an index of a vertex.

In this embodiment, the to-be-sorted vertices are sorted according to a preset sorting criterion. For example, the sorting criterion may be sorting based on a distance between a vertex and a midpoint of the first edge of the to-be-encoded triangle, or the sorting criterion may be sorting based on a size of a radius of a circumscribed circle of a triangle formed by the vertex and the first edge. Certainly, the sorting criterion may be another criterion, which is not particularly limited herein.

Optionally, the method further includes:

In a case that the decoding information includes vertex information of the target vertex, the decoder side determines the target vertex of the to-be-decoded triangle based on the vertex information.

Optionally, the method further includes:

The decoder side obtains target vertex information of the to-be-decoded triangle in a second spatial range based on the decoding information, where the second spatial range is a range other than the first spatial range in the target three-dimensional mesh.

The decoder side determines the target vertex of the to-be-decoded triangle based on the target vertex information.

Optionally, the determining to-be-sorted vertices in a first spatial range based on a spatial angle of neighboring triangular patches in the target three-dimensional mesh includes:

The decoder side excludes all vertices of a second target triangle from vertices in the first spatial range, to obtain remaining vertices.

The decoder side determines the to-be-sorted vertices in the first spatial range based on the remaining vertices, where

the second target triangle is a triangle whose angle with a neighboring decoded triangle is less than an angle threshold, and one edge of the second target triangle is the same as the first edge of the to-be-decoded triangle.

Optionally, the method further includes:

The decoder side obtains information about the angle threshold based on the decoding information.

Optionally, the method further includes:

The decoder side obtains information about the first spatial range based on the decoding information.

For example, radius information of two spheres is obtained based on the decoding information.

In a specific embodiment of this application, the decoder side first decodes the geometry information, and then decodes the connectivity relationship based on the geometry information, where a process of decoding the connectivity relationship may specifically include the following.

(1) Decode a vertex of an initial triangle, and store an edge of the initial triangle into an edge set. An edge $\tau$ is taken out of the edge set according to a criterion used in an encoder. If a to-be-decoded codeword is an index of a vertex, the vertex is directly decoded and used as an opposite vertex v. A newly decoded triangle is formed by the vertex v and the edge $\tau$, two edges of the triangle other than the edge $\tau$ are added to the edge set, and the edge $\tau$ in the set is removed according to a specific rule, for example, the edge $\tau$ is removed according to a queue top criterion. A next edge is taken out according to a specific rule and a neighboring triangle of the edge continues to be decoded. For example, the rule may be taking out an edge at a top of a queue.

(2) If the to-be-decoded codeword is not the index of the vertex, decode and determine a spatial range of the opposite vertex v. For example, radii $\{R_{min}, R_{max}\}$ of two concentric spheres using a midpoint of $\tau$ are decoded, all vertices in a range between the concentric spheres are traversed, and all vertices of a new triangle that is formed with the edge $\tau$ and whose angle with a decoded triangle is less than a specific angle.

(3) For remaining vertices in the spatial range in which the opposite vertex v is located, sort the vertices according to the same sorting criterion as that of the encoder side. A sequence number corresponding to the opposite vertex v in the to-be-decoded triangle is decoded, and the opposite vertex v is obtained by looking up a table, to construct the decoded triangle. Two edges of a newly decoded triangle other than the edge τ are added to the edge set, and the edge τ in the set is removed according to a specific rule, for example, the edge τ is removed according to the queue top criterion. A next edge is taken out according to a specific rule and a neighboring triangle of the edge continues to be decoded. For example, the rule may be taking out an edge at a top of a queue.

The decoding process is iterated for a bitstream of each patch until triangles in each patch are decoded. Finally, patches are merged into the complete mesh.

Optionally, the third bitstream includes a first sub-bitstream and a second sub-bitstream, the attribute information includes texture coordinate information and a texture map, and the texture coordinate information is used for representing texture coordinates corresponding to vertices in the target three-dimensional mesh.

The determining attribute information corresponding to the target three-dimensional mesh based on the third bitstream and the attribute encoding manner includes:

In a case that the attribute encoding manner is a first attribute encoding manner, the decoder side determines the texture coordinates corresponding to the vertices in the target three-dimensional mesh based on the first sub-bitstream.

The decoder side decodes the second sub-bitstream by using a video decoder, to obtain the texture map corresponding to the target three-dimensional mesh.

It should be understood that the third bitstream includes a first sub-bitstream and a second sub-bitstream, and the attribute information includes texture coordinate information and a texture map.

In this embodiment, the third bitstream is decomposed, to obtain the first sub-bitstream and the second sub-bitstream. Based on the first sub-bitstream, the texture coordinates corresponding to each vertex are determined. For a specific technical solution on how to determine the texture coordinates corresponding to each vertex, refer to subsequent embodiments.

In this embodiment, the texture map may be directly encoded using a video decoder, to obtain the texture map corresponding to the target three-dimensional mesh, and a file format of the texture map may be a format such as jpg or png. The video decoder includes, but is not limited to, an HEVC decoder and a VVC decoder.

Optionally, the determining the texture coordinates corresponding to the vertices in the target three-dimensional mesh based on the first sub-bitstream includes:

The decoder side performs entropy decoding on the first sub-bitstream, to obtain a prediction residual corresponding to each decoded triangle.

The decoder side selects a second edge from an edge set corresponding to the target three-dimensional mesh for any decoded triangle, where the edge set is a set of at least one edge of the decoded triangle in the target three-dimensional mesh.

The decoder side determines a predicted triangle based on the second edge and vertices corresponding to the second edge.

The decoder side determines a vertex of the second edge other than two vertices connected to the second edge among vertices corresponding to the predicted triangle as a predicted vertex.

The decoder side determines an actual vertex corresponding to the decoded triangle based on the predicted vertex and the predicted residual, where coordinates of the actual vertex in the target three-dimensional mesh are texture coordinates.

The decoder side performs entropy decoding on the first sub-bitstream, to obtain a prediction residual corresponding to each decoded triangle. Coordinates of a predicted vertex corresponding to each triangle and a corresponding prediction residual are added, to obtain an actual vertex corresponding to the triangle.

A process of determining the predicted vertex corresponding to the triangle is an inverse process of determining the predicted vertex described above, and includes: selecting a second edge from an edge set corresponding to the target three-dimensional mesh; determining a predicted triangle based on the second edge and vertices corresponding to the second edge using a parallelogram prediction method; and determining a vertex of the second edge other than two vertices connected to the second edge among vertices corresponding to the predicted triangle as a predicted vertex. The edge set is a set of at least one edge of the decoded triangle in the target three-dimensional mesh.

Optionally, the determining attribute information corresponding to the target three-dimensional mesh based on the third bitstream and the attribute encoding manner includes:

In a case that the attribute encoding manner is a second attribute encoding manner, the decoder side determines the reconstructed texture coordinates corresponding to the vertices in the target three-dimensional mesh based on the first sub-bitstream.

The decoder side decodes the second sub-bitstream by using a video decoder, to obtain the reconstructed texture map corresponding to the target three-dimensional mesh.

In this embodiment, in a case that the attribute encoding manner is the second attribute encoding manner, it indicates that the third bitstream includes the first sub-bitstream and the second sub-bitstream, and as described above, the first sub-bitstream is a bitstream obtained by encoding the reconstructed texture coordinate information. The second sub-bitstream is a bitstream obtained by encoding the reconstructed texture map. In this case, the decoder side determines the reconstructed texture coordinates corresponding to the vertices in the target three-dimensional mesh based on the first sub-bitstream; and decodes the second sub-bitstream by using a video decoder, to obtain the reconstructed texture map corresponding to the target three-dimensional mesh.

Optionally, the determining attribute information corresponding to the target three-dimensional mesh based on the third bitstream and the attribute encoding manner includes:

In a case that the attribute encoding manner is a third attribute encoding manner, the decoder side determines reconstructed texture coordinates corresponding to vertices in the target three-dimensional mesh based on the third bitstream.

The decoder side decodes the third bitstream by using a video decoder, to obtain the reconstructed texture map corresponding to the target three-dimensional mesh.

In this embodiment, in a case that the attribute encoding manner is the third attribute encoding manner, it indicates that the third bitstream includes the second sub-bitstream, and as described above, the second sub-bitstream is a bitstream obtained by encoding the reconstructed texture map. In this case, the decoder side decodes the second sub-bitstream by using the video decoder, to obtain the reconstructed texture map corresponding to the target three-dimensional mesh.

In this embodiment, in a case that the attribute encoding manner is the third attribute encoding manner, it indicates that the third bitstream includes the second sub-bitstream obtained by encoding the reconstructed texture map. In this case, the second sub-bitstream is decoded by using a video decoder, to obtain the reconstructed texture map corresponding to the target three-dimensional mesh. The decoder side obtains a residual value corresponding to a reconstructed texture coordinate value of each vertex through decoding, uses geometry information obtained through the decoding to obtain a predicted texture coordinate value of the vertex, and then uses the reconstructed texture coordinate value and the predicted texture coordinate value, to determine a target texture coordinate value, that is, target texture coordinate information.

The encoding method provided in embodiments of this application may be executed by an encoding apparatus. An encoding apparatus provided in embodiments of this application is described using the execution of the encoding method by the encoding apparatus as an example in embodiments of this application.

As shown in FIG. 13, the encoding apparatus 1300 includes:

an encoding module 1301, configured to encode first information corresponding to a target three-dimensional mesh, to obtain a first bitstream;

a first determining module 1302, configured to determine a second bitstream based on connection information corresponding to a first reconstructed mesh;

a second determining module 1303, configured to determine a third bitstream based on target information and an attribute encoding manner; and

a generation module 1304, configured to generate a target bitstream based on the first bitstream, the second bitstream, and the third bitstream.

Optionally, the encoding apparatus 1300 further includes:

a simplification module, configured to: in a case of a lossy encoding mode, perform simplification processing on a to-be-encoded three-dimensional mesh, to obtain the target three-dimensional mesh; and

a determining module, configured to: in a case of a lossless encoding mode, determine a to-be-encoded three-dimensional mesh as the target three-dimensional mesh.

Optionally, the simplification module is further configured to:

perform simplification processing on the to-be-encoded three-dimensional mesh based on a quantization parameter, to obtain the target three-dimensional mesh.

Optionally, the simplification module is further configured to:

when performing vertex merging in the to-be-encoded three-dimensional mesh, adjust coordinates of positions of at least a part of vertices obtained after the vertex merging in the to-be-encoded three-dimensional mesh to a multiple of the quantization parameter, to obtain the target three-dimensional mesh.

Optionally, the encoding module 1301 is specifically configured to:

quantize the geometry information of the target three-dimensional mesh, to obtain the first information; and

encode the first information, to obtain the first bitstream.

Optionally, the encoding module 1301 is further specifically configured to:
quantize each vertex in the target three-dimensional mesh based on a quantization parameter of each component, to obtain the first-precision geometry information.

Optionally, the encoding module 1301 is further specifically configured to:
obtain the second-precision geometry information based on the first-precision geometry information and a quantization parameter of each component.

Optionally, the encoding module 1301 is further specifically configured to:
determine the information about the supplementary point based on the geometry information of the target three-dimensional mesh and the first-precision geometry information.

Optionally, the encoding module 1301 is further specifically configured to:

process the first information, to obtain second information; and
encode the second information, to obtain the first bitstream.

Optionally, the encoding module 1301 is further specifically configured to:

perform three-dimensional patch division on the first-precision geometry information;
perform two-dimensional projection on a three-dimensional patch obtained through division, to obtain a two-dimensional patch;
pack the two-dimensional patch, to obtain two-dimensional image information; and
obtain a first-precision occupancy map and a first-precision geometry map based on the two-dimensional image information.

Optionally, the encoding module 1301 is further specifically configured to:

obtain patch information based on information in a process of obtaining the two-dimensional image information; and
encode the patch information, to obtain a patch information sub-bitstream.

Optionally, the encoding module 1301 is further specifically configured to:

obtain an arrangement order of vertices included in the first-precision geometry information; and
arrange the second-precision geometry information corresponding to the vertices included in the first-precision geometry information in a two-dimensional image, to generate a second-precision geometry map.

Optionally, the encoding module 1301 is further specifically configured to:
encode a first-precision geometry map and a second-precision geometry map, to obtain a geometry map sub-bitstream.

Optionally, the encoding module 1301 is further specifically configured to:

arrange third-precision geometry information of the supplementary point into a first original patch;
arrange fourth-precision geometry information of the supplementary point into a second original patch in a same arrangement order as that of the first original patch; and
compress the first original patch and the second original patch, to obtain a geometry map of the supplementary point.

Optionally, the first determining module 1302 is specifically configured to:

determine to-be-sorted vertices in a first spatial range based on a spatial angle of neighboring triangular patches in the first reconstructed mesh;
sort the to-be-sorted vertices, to obtain sorting information of the target vertex;
obtain encoding information of the to-be-encoded triangle based on encoding information corresponding to the sorting information of the target vertex;
update an edge set based on a first preset rule;
redetermine a to-be-encoded triangle based on an updated edge set until encoding information of all to-be-encoded triangles in the first reconstructed mesh is obtained; and
encode the encoding information of all the to-be-encoded triangles, to obtain the second bitstream.

Optionally, the first determining module 1302 is further specifically configured to:

select a first edge from an edge set corresponding to the first reconstructed mesh; and
determine the to-be-encoded triangle based on the first edge and vertices corresponding to the first edge.

Optionally, the first determining module 1302 is further specifically configured to:
in a case that the to-be-encoded triangle is a triangle other than a preset category triangle, determine the to-be-sorted vertices in the first spatial range based on the spatial angle of the neighboring triangular patches.

Optionally, the first determining module 1302 is further specifically configured to:
in a case that the to-be-encoded triangle is a preset category triangle, obtain the encoding information of the to-be-encoded triangle based on encoding information corresponding to target vertex information of the to-be-encoded triangle.

Optionally, the first determining module 1302 is further specifically configured to:

exclude all vertices of a first target triangle from vertices in the first spatial range, to obtain remaining vertices; and
determine the to-be-sorted vertices in the first spatial range based on the remaining vertices.

Optionally, the first determining module 1302 is further specifically configured to:
encode target vertex information of a to-be-encoded triangle in a second spatial range, to obtain encoded information of the to-be-encoded triangle.

Optionally, the second determining module 1303 is specifically configured to:

in a case that the attribute encoding manner is a first attribute encoding manner, determine the third bitstream based on the attribute information corresponding to the first reconstructed mesh; and
in a case that the attribute encoding manner is a second attribute encoding manner or a third attribute encoding manner, determine the third bitstream based on the target three-dimensional mesh and the target texture map corresponding to the target three-dimensional mesh.

Optionally, the second determining module 1303 is further specifically configured to:

perform entropy encoding on a first target coordinate difference, to obtain a first sub-bitstream;
encode, by the encoder side, the texture map by using a video encoder, to obtain a second sub-bitstream; and
obtain, by the encoder side, the third bitstream by combining the first sub-bitstream and the second sub-bitstream.

Optionally, the second determining module 1303 is further specifically configured to:

select a second edge from an edge set corresponding to the first reconstructed mesh;
determine a predicted triangle based on the second edge and vertices corresponding to the second edge;
determine a vertex of the second edge other than two vertices connected to the second edge among vertices corresponding to the predicted triangle as a predicted vertex; and
determine a coordinate difference between the predicted vertex and an actual vertex as the target coordinate difference.

Optionally, the second determining module 1303 is further specifically configured to:

in a case that the attribute encoding manner is the second attribute encoding manner, perform surface spectral processing on the target three-dimensional mesh, to obtain the reconstructed texture coordinate information;
perform rasterization processing on the target texture map by using the target three-dimensional mesh, the target texture map, and the reconstructed texture coordinate information, to obtain the reconstructed texture map;
perform entropy encoding on a second target coordinate difference, to obtain a first sub-bitstream;
encode the reconstructed texture map by using a video encoder, to obtain a second sub-bitstream; and
obtain the third bitstream based on the first sub-bitstream and the second sub-bitstream.

Optionally, the second determining module 1303 is further specifically configured to:

in a case that the attribute encoding manner is the third attribute encoding manner, perform surface spectral processing on the target three-dimensional mesh, to obtain the reconstructed texture coordinate information;
perform rasterization processing on the target texture map by using the target three-dimensional mesh, the target texture map, and the reconstructed texture coordinate information, to obtain the reconstructed texture map; and
encode the reconstructed texture map by using a video encoder, to obtain a third sub-bitstream.

In this embodiment of this application, the first information corresponding to the target three-dimensional mesh is encoded, to obtain the first bitstream; the second bitstream is determined based on the connection information corresponding to the first reconstructed mesh, where the first reconstructed mesh is determined based on the first information and the target three-dimensional mesh; a third bitstream is determined based on target information and an attribute encoding manner, where the target information includes attribute information corresponding to the first reconstructed mesh or includes the target three-dimensional mesh and a target texture map corresponding to the target three-dimensional mesh; and further, the target bitstream is generated based on the first bitstream, the second bitstream, and the third bitstream. In the foregoing technical solution, based on the attribute encoding manner, the attribute information corresponding to the first reconstructed mesh is encoded, to obtain the third bitstream; or based on the attribute encoding manner, the target three-dimensional mesh and the target texture map are used for obtaining the third bitstream. In this way, after lossy compression is performed on geometry information of the target three-dimensional mesh, an attribute information bitstream can be obtained by using the foregoing manner, to avoid a failure in encoding.

The encoding apparatus provided in embodiments of this application can implement the processes implemented in the encoding method of the embodiment of FIG. 1, and the same technical effects are achieved. To avoid repetition, details are not described herein again.

The decoding method provided in embodiments of this application may be executed by a decoding apparatus. A decoding apparatus provided in embodiments of this application is described using the execution of the decoding method by the decoding apparatus as an example in embodiments of this application.

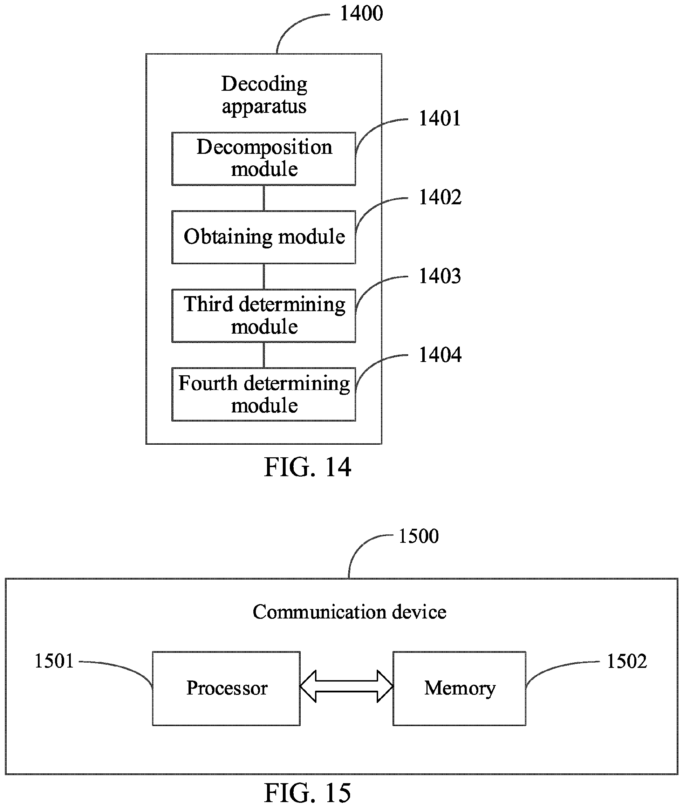

As shown in FIG. 14, the decoding apparatus 1400 includes:

a decomposition module 1401, configured to decompose an obtained target bitstream, to obtain first information, decoding information, an attribute encoding manner, and a third bitstream;
an obtaining module 1402, configured to obtain geometry information corresponding to a target three-dimensional mesh based on the first information;
a third determining module 1403, configured to determine connection information corresponding to the target three-dimensional mesh based on the decoding information; and
a fourth determining module 1404, configured to determine attribute information corresponding to the target three-dimensional mesh based on the third bitstream and the attribute encoding manner.

Optionally, the decomposition module 1401 is specifically configured to:

obtain a target sub-bitstream based on the obtained target bitstream;
obtain second information based on the target sub-bitstream; and
obtain the first information based on the second information.

Optionally, the decomposition module 1401 is further specifically configured to:

obtain two-dimensional image information based on a first-precision occupancy map and a first-precision geometry map;
obtain a two-dimensional patch based on the two-dimensional image information;
perform three-dimensional backprojection on the two-dimensional patch based on patch information corresponding to the patch information sub-bitstream, to obtain a three-dimensional patch; and
obtain the first-precision geometry information based on the three-dimensional patch.

Optionally, the decomposition module 1401 is further specifically configured to:
obtain the second-precision geometry information based on a second-precision geometry map.

Optionally, the decomposition module 1401 is further specifically configured to:

determine a first original patch corresponding to third-precision geometry information of the supplementary point and a second original patch corresponding to fourth-precision geometry information of the supplementary point based on a geometry map of the supplementary point; and
determine the information about the supplementary point based on the first original patch and the second original patch.

Optionally, the obtaining module 1402 is specifically configured to:

determine, based on first-precision geometry information and a quantization parameter of each component, coordinates of each vertex in the first-precision geometry information; and

determine geometry information corresponding to the target three-dimensional mesh based on the coordinates of each vertex in the target three-dimensional mesh and second-precision geometry information.

Optionally, the obtaining module 1402 is further specifically configured to:
determine the geometry information corresponding to the target three-dimensional mesh based on information about a supplementary point and coordinates of each vertex in the first-precision geometry information.

Optionally, the third determining module 1403 is specifically configured to:

in a case that the decoding information includes sorting information of a target vertex, determine to-be-sorted vertices in a first spatial range based on a spatial angle of neighboring triangular patches in the target three-dimensional mesh, and sort the to-be-sorted vertices;
determine the target vertex of the to-be-decoded triangle among the to-be-sorted vertices based on a sorting result of the to-be-sorted vertices and the sorting information of the target vertex;
determine the to-be-decoded triangle based on the target vertex and a first edge of the to-be-decoded triangle;
update an edge set based on a second preset rule; and
redetermine the first edge based on an updated edge set until each to-be-decoded triangle in the target three-dimensional mesh is determined.

Optionally, the third determining module 1403 is further specifically configured to:
in a case that the decoding information includes vertex information of the target vertex, determine the target vertex of the to-be-decoded triangle based on the vertex information.

Optionally, the third determining module 1403 is further specifically configured to:

obtain target vertex information of the to-be-decoded triangle in a second spatial range based on the decoding information; and
determine the target vertex of the to-be-decoded triangle based on the target vertex information.

Optionally, the third determining module 1403 is further specifically configured to:

exclude all vertices of a second target triangle from vertices in the first spatial range, to obtain remaining vertices; and
determine the to-be-sorted vertices in the first spatial range based on the remaining vertices.

Optionally, the third determining module 1403 is further specifically configured to:
obtain information about the angle threshold based on the decoding information.

Optionally, the third determining module 1403 is further specifically configured to:
obtain information about the first spatial range based on the decoding information.

Optionally, the fourth determining module 1404 is specifically configured to:

in a case that the attribute encoding manner is a first attribute encoding manner, determine the texture coordinates corresponding to the vertices in the target three-dimensional mesh based on the first sub-bitstream; and
decode the second sub-bitstream by using a video decoder, to obtain the texture map corresponding to the target three-dimensional mesh.

Optionally, the fourth determining module 1404 is further specifically configured to:

perform entropy decoding on the first sub-bitstream, to obtain a prediction residual corresponding to each decoded triangle;
select a second edge from an edge set corresponding to the target three-dimensional mesh for any decoded triangle;
determine a predicted triangle based on the second edge and vertices corresponding to the second edge;
determine a vertex of the second edge other than two vertices connected to the second edge among vertices corresponding to the predicted triangle as a predicted vertex; and
determine an actual vertex corresponding to the decoded triangle based on the predicted vertex and the predicted residual.

Optionally, the fourth determining module 1404 is further specifically configured to:

in a case that the attribute encoding manner is a second attribute encoding manner, determine the reconstructed texture coordinates corresponding to the vertices in the target three-dimensional mesh based on the first sub-bitstream; and

decode the second sub-bitstream by using a video decoder, to obtain the reconstructed texture map corresponding to the target three-dimensional mesh.

Optionally, the fourth determining module 1404 is further specifically configured to:

in a case that the attribute encoding manner is a third attribute encoding manner, determine reconstructed texture coordinates corresponding to vertices in the target three-dimensional mesh based on the third bitstream; and

decode, by the decoder side, the third bitstream by using a video decoder, to obtain the reconstructed texture map corresponding to the target three-dimensional mesh.

In this embodiment of this application, the obtained target bitstream is decomposed, to obtain the first information, the attribute encoding manner, the decoding information, and the third bitstream. The geometry information corresponding to the target three-dimensional mesh is obtained based on the first information. The connection information corresponding to the target three-dimensional mesh is determined based on the decoding information. The attribute information corresponding to the target three-dimensional mesh is determined based on the third bitstream and the attribute encoding manner. In the foregoing technical solutions, a decoding manner for the third bitstream is determined based on the attribute encoding manner, and correct attribute information is obtained, to avoid a failure in decoding.

The encoding apparatus and the decoding apparatus in embodiments of this application may each be an electronic device, for example, an electronic device having an operating system, or may each be a component, for example, an integrated circuit or a chip in an electronic device. The electronic device may be a terminal or may be a device other than a terminal. For example, the terminal may include, but not limited to, the types of the terminal 11 listed above, and another device may be a server, a network attached storage (Network Attached Storage, NAS), and the like. This is not specifically limited in the embodiments of this application.

The decoding apparatus provided in embodiments of this application can implement the processes implemented in the decoding method of the embodiment of FIG. 11, and the same technical effects are achieved. To avoid repetition, details are not described herein again.

Optionally, as shown in FIG. 15, an embodiment of this application further provides a communication device 1500, including a processor 1501 and a memory 1502. The memory 1502 stores a program or instructions executable on the processor 1501. For example, when the communication device 1500 is a terminal, the program or instructions, when executed by the processor 1501, implements the steps of the encoding method in the foregoing embodiments and can achieve the same technical effects, or implements the steps of the decoding method in the foregoing embodiments and can achieve the same technical effects.

An embodiment of this application further provides a terminal, including a processor and a communication interface. The processor 1501 is configured to perform the following operations:

encoding first information corresponding to a target three-dimensional mesh, to obtain a first bitstream;

determining a second bitstream based on connection information corresponding to a first reconstructed mesh;

determining a third bitstream based on target information and an attribute encoding manner; and

generating a target bitstream based on the first bitstream, the second bitstream, and the third bitstream.

Alternatively, the processor 1501 is configured to perform the following operations:

decomposing an obtained target bitstream, to obtain first information, decoding information, an attribute encoding manner, and a third bitstream;

obtaining geometry information corresponding to a target three-dimensional mesh based on the first information;

determining connection information corresponding to the target three-dimensional mesh based on the decoding information; and

determining attribute information corresponding to the target three-dimensional mesh based on the third bitstream and the attribute encoding manner.

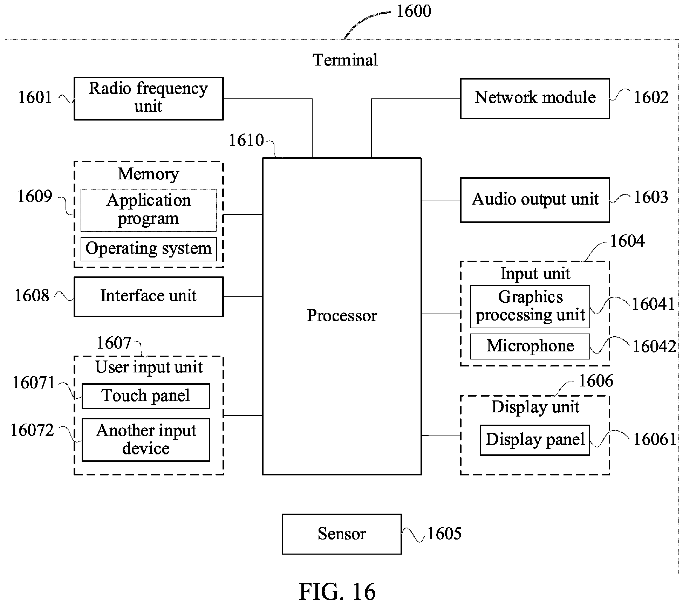

The terminal embodiment corresponds to the foregoing terminal-side method embodiment, and the various implementation processes and implementations of the foregoing method embodiments can be applied to the terminal embodiment, and can achieve the same technical effects. Specifically, FIG. 16 is a schematic diagram of a hardware structure of a terminal that implements embodiments of this application.

The terminal 1600 includes, but is not limited to, a radio frequency unit 1601, a network module 1602, an audio output unit 1603, an input unit 1604, a sensor 1605, a display unit 1606, a user input unit 1607, an interface unit 1607, a memory 1609, a processor 1610, or another component.

A person skilled in the art may understand that the terminal 1600 further includes a power supply (such as a battery) for supplying power to the components. The power supply may be logically connected to the processor 1610 by using a power supply management system, thereby implementing functions, such as charging, discharging, and power consumption management, by using the power supply management system. The terminal structure shown in FIG. 16 does not constitute a limitation to the terminal, and the terminal may include more or fewer components than those shown in the figure, or some components may be combined, or a different component deployment may be used. Details are not described herein again.

It should be understood that, in this embodiment of this application, the input unit 1604 may include a graphics processing unit (Graphics Processing Unit, GPU) 16041 and a microphone 16042. The graphics processing unit 16041 performs processing on image data of a static picture or a video that is obtained by an image acquisition apparatus (for example, a camera) in a video acquisition mode or an image acquisition mode. The display unit 1606 may include a display panel 16061. For example, the display panel 16061 may be configured in a form such as a liquid crystal display or an organic light-emitting diode. The user input unit 1607 includes at least one of a touch panel 16071 and another input device 16072. The touch panel 16071 is also referred to as a touchscreen. The touch panel 16071 may include two parts: a touch detection apparatus and a touch controller. Specifically, the another input device 16072 may include, but not limited to, a physical keyboard, a functional key (such as a volume control key or a switch key), a track ball, a mouse, and a joystick, which are not described herein in detail.

In this embodiment of this application, the radio frequency unit 1601 receives downlink data from a network side device and then transmits the downlink data to the processor 1610 for processing. The radio frequency unit 1601 may send uplink data to the network side device. Generally, the radio frequency unit 701 includes, but is not limited to, an antenna, an amplifier, a transceiver, a coupler, a low noise amplifier, a duplexer, and the like.

The memory 1609 may be configured to store a software program or instructions and various data. The memory 1609 may mainly include a first storage area for storing a program or instructions and a second storage area for storing data. The first storage area may store an operating system, an application program or instructions required for at least one function (for example, a sound playback function or an image display function), and the like. It can be understood that the memory 1609 may include a volatile memory or a non-volatile memory, or the memory 1609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 1609 in this embodiment of this application includes, but not limited to, these memories and any other suitable type of memory.

The processor 1610 may include one or more processing units. Optionally, the processor 1610 may integrate an application processor and a modem processor, where the application processor mainly processes an operation related to an operating system, a user interface, an application program, and the like, and the modem processor such as a baseband processor mainly processes a wireless communication signal. It may be understood that the foregoing modem processor may not be integrated into the processor 1610.

The processor 1610 is configured to perform the following operations:

encoding first information corresponding to a target three-dimensional mesh, to obtain a first bitstream;
determining a second bitstream based on connection information corresponding to a first reconstructed mesh;
determining a third bitstream based on target information and an attribute encoding manner; and
generating a target bitstream based on the first bitstream, the second bitstream, and the third bitstream.

Alternatively, the processor 1601 is configured to perform the following operations:

decomposing an obtained target bitstream, to obtain first information, decoding information, an attribute encoding manner, and a third bitstream;
obtaining geometry information corresponding to a target three-dimensional mesh based on the first information;
determining connection information corresponding to the target three-dimensional mesh based on the decoding information; and
determining attribute information corresponding to the target three-dimensional mesh based on the third bitstream and the attribute encoding manner.

An embodiment of this application further provides a readable storage medium, storing a program or instructions. The program or instructions, when executed by a processor, implements the processes of the encoding method in the foregoing embodiments or the processes of the decoding method in the foregoing embodiments, and can achieve the same technical effects. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disk.

An embodiment of this application further provides a chip, including a processor and a communication interface. The communication interface is coupled to the processor. The processor is configured to run a program or instructions, to implement the processes of the encoding method in the foregoing embodiments or the processes of the decoding method in the foregoing embodiments, and can achieve the same technical effects. To avoid repetition, details are not described herein again.

It should be understood that the chip described in embodiments of this application may also be referred to as a system-level chip, a system chip, a chip system, a system on chip, or the like.

An embodiment of this application further provides a computer program/program product. The computer program/program product is stored in a storage medium. The computer program/program product, when executed by at least one processor, implements the processes of the encoding method in the foregoing embodiments or the processes of the decoding method in the foregoing embodiments, and can achieve the same technical effects. To avoid repetition, details are not described herein again.

It should be noted that, the terms "include", "have", or any other variation thereof in this specification are intended to cover a non-exclusive inclusion, so that a process, method, article, or apparatus that includes a list of elements includes the elements, and also includes other elements that are not expressly listed, or further includes elements inherent to such a process, method, article, or apparatus. Without more limitations, an element defined by the sentence "including one" does not exclude that there are still other same elements in the process, method, article, or an apparatus that includes the element. In addition, it should be noted that the scope of the methods and apparatuses in the embodiments of this application is not limited to performing the functions in the order shown or discussed, but also can include performing the functions in basically the same way or in the opposite order according to the functions involved, for example, the described methods may be performed in a different order from the described ones, and various steps can also be added, omitted, or combined. In addition, features described with reference to some examples may be combined in other examples.

According to the descriptions in the foregoing implementations, a person skilled in the art may clearly learn that the method in the foregoing embodiments may be implemented by relying on software plus a necessary universal hardware platform, or certainly, by using hardware. However, in most cases, the former is a preferred implementation. Based on such an understanding, the technical solutions in this application essentially or the part contributing to the related art may be implemented in the form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

Embodiments of this application are described above with reference to the accompanying drawings. However, this application is not limited to the specific implementations described above, and the specific implementations described above are merely exemplary and not limitative. Inspired by this application, a person of ordinary skill in the art may make various variations without departing from the principle of this application and the protection scope of the claims, and such variations shall all fall within the protection scope of this application.

**Claims**

1.  An encoding method, comprising:

    encoding, by an encoder side, first information corresponding to a target three-dimensional mesh, to obtain a first bitstream, wherein the first information is determined based on geometry information corresponding to the target three-dimensional mesh;
    determining, by the encoder side, a second bitstream based on connection information corresponding to a first reconstructed mesh, wherein the first reconstructed mesh is determined based on the first information and the target three-dimensional mesh;
    determining, by the encoder side, a third bitstream based on target information and an attribute encoding manner, wherein the target information comprises attribute information corresponding to the first reconstructed mesh or comprises the target three-dimensional mesh and a target texture map corresponding to the target three-dimensional mesh; and

generating, by the encoder side, a target bitstream based on the first bitstream, the second bitstream, and the third bitstream.

2. The method according to claim 1, wherein before the encoding first information corresponding to a target three-dimensional mesh, the method comprises:

in a case of a lossy encoding mode, performing simplification processing on a to-be-encoded three-dimensional mesh, to obtain the target three-dimensional mesh; or
in a case of a lossless encoding mode, determining a to-be-encoded three-dimensional mesh as the target three-dimensional mesh.

3. The method according to claim 2, wherein the performing simplification processing on a to-be-encoded three-dimensional mesh, to obtain the target three-dimensional mesh comprises:
performing, by the encoder side, simplification processing on the to-be-encoded three-dimensional mesh based on a quantization parameter, to obtain the target three-dimensional mesh.

4. The method according to claim 3, wherein the performing simplification processing on the to-be-encoded three-dimensional mesh based on a quantization parameter, to obtain the target three-dimensional mesh comprises:
when the encoder side performs vertex merging in the to-be-encoded three-dimensional mesh, the encoder side adjusts coordinates of positions of at least a part of vertices obtained after the vertex merging in the to-be-encoded three-dimensional mesh to a multiple of the quantization parameter, to obtain the target three-dimensional mesh.

5. The method according to claim 1, wherein the encoding first information corresponding to a target three-dimensional mesh, to obtain a first bitstream comprises:

quantizing, by the encoder side, the geometry information of the target three-dimensional mesh, to obtain the first information, wherein the first information comprises at least one of the following: first-precision geometry information, second-precision geometry information, information about a supplementary point; and
encoding, by the encoder side, the first information, to obtain the first bitstream, wherein
the first-precision geometry information is geometry information obtained after quantization of the target three-dimensional mesh, the second-precision geometry information is geometry information lost in a quantization process of the target three-dimensional mesh, and the information about the supplementary point is information about a point that needs additional processing and that is generated in the quantization process.

6. The method according to claim 5, wherein the quantizing the geometry information of the target three-dimensional mesh, to obtain the first information comprises:
quantizing, by the encoder side, each vertex in the target three-dimensional mesh based on a quantization parameter of each component, to obtain the first-precision geometry information.

7. The method according to claim 5, wherein the quantizing the geometry information of the target three-dimensional mesh, to obtain the first information comprises:
obtaining, by the encoder side, the second-precision geometry information based on the first-precision geometry information and a quantization parameter of each component.

8. The method according to claim 5, wherein the quantizing the geometry information of the target three-dimensional mesh, to obtain the first information comprises:
determining, by the encoder side, the information about the supplementary point based on the geometry information of the target three-dimensional mesh and the first-precision geometry information.

9. The method according to claim 5, wherein the encoding the first information, to obtain the first bitstream comprises:

processing, by the encoder side, the first information, to obtain second information, wherein the second information comprises at least one of a occupancy map and a geometry map; and
encoding the second information, to obtain the first bitstream.

10. The method according to claim 9, wherein in a case that the first information comprises the first-precision geometry information, the processing the first information, to obtain second information comprises:

performing, by the encoder side, three-dimensional patch division on the first-precision geometry information;

performing, by the encoder side, two-dimensional projection on a three-dimensional patch obtained through division, to obtain a two-dimensional patch;

packing, by the encoder side, the two-dimensional patch, to obtain two-dimensional image information; and

obtaining, by the encoder side, a first-precision occupancy map and a first-precision geometry map based on the two-dimensional image information.

11. The method according to claim 10, wherein after the packing the two-dimensional patch, to obtain two-dimensional image information, the method comprises:

obtaining, by the encoder side, patch information based on information in a process of obtaining the two-dimensional image information; and

encoding, by the encoder side, the patch information, to obtain a patch information sub-bitstream.

12. The method according to claim 9, wherein in a case that the first information comprises the second-precision geometry information, the processing the first information, to obtain second information comprises:

obtaining, by the encoder side, an arrangement order of vertices comprised in the first-precision geometry information; and

arranging, by the encoder side, the second-precision geometry information corresponding to the vertices comprised in the first-precision geometry information in a two-dimensional image, to generate a second-precision geometry map.

13. The method according to claim 9, wherein the encoding the second information comprises:
encoding, by the encoder side, a first-precision geometry map and a second-precision geometry map, to obtain a geometry map sub-bitstream.

14. The method according to claim 9, wherein in a case that the first information comprises the information about the supplementary point, the processing the first information, to obtain second information comprises:

arranging, by the encoder side, third-precision geometry information of the supplementary point into a first original patch;

arranging, by the encoder side, fourth-precision geometry information of the supplementary point into a second original patch in a same arrangement order as that of the first original patch; and

compressing, by the encoder side, the first original patch and the second original patch, to obtain a geometry map of the supplementary point.

15. The method according to claim 1, wherein the determining a second bitstream based on connection information corresponding to a first reconstructed mesh comprises:

determining, by the encoder side, to-be-sorted vertices in a first spatial range based on a spatial angle of neighboring triangular patches in the first reconstructed mesh, wherein the first spatial range is a spatial range in which a target vertex of a to-be-encoded triangle in the first reconstructed mesh is located, and the to-be-sorted vertices comprise the target vertex;

sorting, by the encoder side, the to-be-sorted vertices, to obtain sorting information of the target vertex;

obtaining, by the encoder side, encoding information of the to-be-encoded triangle based on encoding information corresponding to the sorting information of the target vertex;

updating, by the encoder side, an edge set based on a first preset rule;

redetermining, by the encoder side, a to-be-encoded triangle based on an updated edge set until encoding information of all to-be-encoded triangles in the first reconstructed mesh is obtained; and

encoding, by the encoder side, the encoding information of all the to-be-encoded triangles, to obtain the second bitstream, wherein

the first preset rule comprises: adding two edges other than a first edge of the to-be-encoded triangle to the edge set, and removing the first edge from the edge set.

16. The method according to claim 15, wherein before the determining to-be-sorted vertices in a first spatial range based on a spatial angle of neighboring triangular patches in the first reconstructed mesh, the method comprises:

selecting, by the encoder side, a first edge from an edge set corresponding to the first reconstructed mesh, wherein the edge set is a set of at least one edge of an encoded triangle in the first reconstructed mesh; and determining, by the encoder side, the to-be-encoded triangle based on the first edge and vertices corresponding to the first edge, wherein the target vertex of the to-be-encoded triangle is a vertex other than two vertices connected to the first edge among the vertices corresponding to the first edge.

17. The method according to claim 16, wherein the determining to-be-sorted vertices in a first spatial range based on a spatial angle of neighboring triangular patches in the first reconstructed mesh comprises:
in a case that the to-be-encoded triangle is a triangle other than a preset category triangle, determining, by the encoder side, the to-be-sorted vertices in the first spatial range based on the spatial angle of the neighboring triangular patches.

18. The method according to claim 16, wherein the method further comprises:
in a case that the to-be-encoded triangle is a preset category triangle, obtaining, by the encoder side, the encoding information of the to-be-encoded triangle based on encoding information corresponding to target vertex information of the to-be-encoded triangle.

19. The method according to claim 15, wherein the determining to-be-sorted vertices in a first spatial range based on a spatial angle of neighboring triangular patches in the first reconstructed mesh comprises:

excluding, by the encoder side, all vertices of a first target triangle from vertices in the first spatial range, to obtain remaining vertices; and
determining, by the encoder side, the to-be-sorted vertices in the first spatial range based on the remaining vertices, where
the first target triangle is a triangle whose angle with a neighboring encoded triangle is less than an angle threshold, and one edge of the first target triangle is the same as the first edge of the to-be-encoded triangle.

20. The method according to claim 15, wherein the method further comprises:
encoding, by the encoder side, target vertex information of a to-be-encoded triangle in a second spatial range, to obtain encoded information of the to-be-encoded triangle, wherein the second spatial range is a range other than the first spatial range in the first reconstructed mesh.

21. The method according to claim 1, wherein the determining, by the encoder side, a third bitstream based on target information and an attribute encoding manner comprises:

in a case that the attribute encoding manner is a first attribute encoding manner, determining, by the encoder side, the third bitstream based on the attribute information corresponding to the first reconstructed mesh, wherein the first attribute encoding manner represents encoding the attribute information corresponding to the first reconstructed mesh; and
in a case that the attribute encoding manner is a second attribute encoding manner or a third attribute encoding manner, determining, by the encoder side, the third bitstream based on the target three-dimensional mesh and the target texture map corresponding to the target three-dimensional mesh, wherein the second attribute encoding manner represents encoding reconstructed texture coordinate information and a reconstructed texture map, the third attribute encoding manner represents encoding the reconstructed texture map, and the reconstructed texture coordinate information and the reconstructed texture map are determined based on the target three-dimensional mesh and the target texture map.

22. The method according to claim 21, wherein the attribute information comprises texture coordinate information and a texture map, the texture coordinate information is used for representing texture coordinates corresponding to vertices in the target three-dimensional mesh, and the determining the third bitstream based on the attribute information corresponding to the first reconstructed mesh comprises:

performing, by the encoder side, entropy encoding on a first target coordinate difference, to obtain a first sub-bitstream, wherein the first target coordinate difference is obtained based on the texture coordinate information;
encoding, by the encoder side, the texture map by using a video encoder, to obtain a second sub-bitstream; and
obtaining, by the encoder side, the third bitstream based on the first sub-bitstream and the second sub-bitstream.

23. The method according to claim 22, wherein before the performing entropy encoding on a first target coordinate difference, to obtain a first sub-bitstream, the method comprises:

selecting, by the encoder side, a second edge from an edge set corresponding to the first reconstructed mesh, wherein the edge set is a set of at least one edge of an encoded triangle represented using the texture coordinate information;

determining, by the encoder side, a predicted triangle based on the second edge and vertices corresponding to the second edge;

determining, by the encoder side, a vertex of the second edge other than two vertices connected to the second edge among vertices corresponding to the predicted triangle as a predicted vertex; and

determining, by the encoder side, a coordinate difference between the predicted vertex and an actual vertex as the target coordinate difference, wherein the actual vertex is a vertex of the second edge other than the two vertices connected to the second edge among vertices corresponding to a to-be-encoded triangle.

24. The method according to claim 21, wherein the determining, by the encoder side, the third bitstream based on the target three-dimensional mesh and the target texture map corresponding to the target three-dimensional mesh comprises:

in a case that the attribute encoding manner is the second attribute encoding manner, performing, by the encoder side, surface spectral processing on the target three-dimensional mesh, to obtain the reconstructed texture coordinate information;

performing, by the encoder side, rasterization processing on the target texture map by using the target three-dimensional mesh, the target texture map, and the reconstructed texture coordinate information, to obtain the reconstructed texture map;

performing, by the encoder side, entropy encoding on a second target coordinate difference, to obtain a first sub-bitstream, wherein the second target coordinate difference is obtained based on the reconstructed texture coordinate information;

encoding, by the encoder side, the reconstructed texture map by using a video encoder, to obtain a second sub-bitstream; and

obtaining, by the encoder side, the third bitstream based on the first sub-bitstream and the second sub-bitstream.

25. The method according to claim 21, wherein the determining, by the encoder side, the third bitstream based on the target three-dimensional mesh and the target texture map corresponding to the target three-dimensional mesh comprises:

in a case that the attribute encoding manner is the third attribute encoding manner, performing, by the encoder side, surface spectral processing on the target three-dimensional mesh, to obtain the reconstructed texture coordinate information;

performing, by the encoder side, rasterization processing on the target texture map by using the target three-dimensional mesh, the target texture map, and the reconstructed texture coordinate information, to obtain the reconstructed texture map; and

encoding, by the encoder side, the reconstructed texture map by using a video encoder, to obtain the third bitstream.

26. A decoding method, comprising:

decomposing, by a decoder side, an obtained target bitstream, to obtain first information, decoding information, an attribute encoding manner, and a third bitstream;

obtaining, by the decoder side, geometry information corresponding to a target three-dimensional mesh based on the first information;

determining, by the decoder side, connection information corresponding to the target three-dimensional mesh based on the decoding information; and

determining, by the decoder side, attribute information corresponding to the target three-dimensional mesh based on the third bitstream and the attribute encoding manner.

27. The method according to claim 26, wherein the first information comprises at least one of the following: first-precision geometry information, second-precision geometry information, information about a supplementary point; and the first-precision geometry information is geometry information obtained after quantization of the target three-dimensional mesh, the second-precision geometry information is geometry information lost in a quantization process of the target three-dimensional mesh, and the information about the supplementary point is information about a point that needs additional processing and that is generated in the quantization process; and

the decomposing an obtained target bitstream, to obtain first information comprises:

> obtaining, by the decoder side, a target sub-bitstream based on the obtained target bitstream, wherein the target sub-bitstream comprises: a patch information sub-bitstream, a occupancy map sub-bitstream, and a geometry map sub-bitstream;
> obtaining, by the decoder side, second information based on the target sub-bitstream, wherein the second information comprises: at least one of a occupancy map and a geometry map; and
> obtaining, by the decoder side, the first information based on the second information.

28. The method according to claim 27, wherein in a case that the first information comprises first-precision geometry information, the obtaining the first information based on the second information comprises:

> obtaining, by the decoder side, two-dimensional image information based on a first-precision occupancy map and a first-precision geometry map;
> obtaining, by the decoder side, a two-dimensional patch based on the two-dimensional image information;
> performing, by the decoder side, three-dimensional backprojection on the two-dimensional patch based on patch information corresponding to the patch information sub-bitstream, to obtain a three-dimensional patch; and
> obtaining, by the decoder side, the first-precision geometry information based on the three-dimensional patch.

29. The method according to claim 27, wherein in a case that the first information comprises second-precision geometry information, the obtaining the first information based on the second information comprises:
obtaining, by the decoder side, the second-precision geometry information based on a second-precision geometry map.

30. The method according to claim 27, wherein in a case that the first information comprises information about a supplementary point, the obtaining the first information based on the second information comprises:

> determining, by the decoder side, a first original patch corresponding to third-precision geometry information of the supplementary point and a second original patch corresponding to fourth-precision geometry information of the supplementary point based on a geometry map of the supplementary point; and
> determining, by the decoder side, the information about the supplementary point based on the first original patch and the second original patch.

31. The method according to claim 26, wherein the obtaining geometry information corresponding to a target three-dimensional mesh based on the first information comprises:

> determining, by the decoder side based on first-precision geometry information and a quantization parameter of each component, coordinates of each vertex in the first-precision geometry information; and
> determining, by the decoder side, geometry information corresponding to the target three-dimensional mesh based on coordinates of each vertex in the target three-dimensional mesh and second-precision geometry information.

32. The method according to claim 31, wherein the obtaining geometry information corresponding to a target three-dimensional mesh based on the first information further comprises:
determining, by the decoder side, the geometry information corresponding to the target three-dimensional mesh based on information about a supplementary point and the coordinates of each vertex in the first-precision geometry information.

33. The method according to claim 26, wherein the determining connection information corresponding to the target three-dimensional mesh based on the decoding information comprises:

> in a case that the decoding information comprises sorting information of a target vertex, determining, by the decoder side, to-be-sorted vertices in a first spatial range based on a spatial angle of neighboring triangular patches in the target three-dimensional mesh, and sorting the to-be-sorted vertices, wherein the sorting information is a sequence number of the target vertex in the to-be-sorted vertices in the first spatial range, and the first spatial range is a spatial range in which the target vertex of a to-be-decoded triangle in the target three-dimensional mesh is located;
> determining, by the decoder side, the target vertex of the to-be-decoded triangle among the to-be-sorted vertices based on a sorting result of the to-be-sorted vertices and the sorting information of the target vertex;

determining, by the decoder side, the to-be-decoded triangle based on the target vertex and a first edge of the to-be-decoded triangle;

updating, by the decoder side, an edge set based on a second preset rule; and

redetermining, by the decoder side, the first edge based on an updated edge set until each to-be-decoded triangle in the target three-dimensional mesh is determined, wherein

the second preset rule comprises: adding two edges other than the first edge of the to-be-decoded triangle to the edge set, and removing the first edge from the edge set.

34. The method according to claim 33, wherein the method further comprises:

in a case that the decoding information comprises vertex information of the target vertex, determining, by the decoder side, the target vertex of the to-be-decoded triangle based on the vertex information.

35. The method according to claim 33, wherein the method further comprises:

obtaining, by the decoder side, target vertex information of the to-be-decoded triangle in a second spatial range based on the decoding information, wherein the second spatial range is a range other than the first spatial range in the target three-dimensional mesh; and

determining, by the decoder side, the target vertex of the to-be-decoded triangle based on the target vertex information.

36. The method according to claim 33, wherein the determining to-be-sorted vertices in a first spatial range based on a spatial angle of neighboring triangular patches in the target three-dimensional mesh comprises:

excluding, by the decoder side, all vertices of a second target triangle from vertices in the first spatial range, to obtain remaining vertices; and

determining, by the decoder side, the to-be-sorted vertices in the first spatial range based on the remaining vertices, wherein

the second target triangle is a triangle whose angle with a neighboring decoded triangle is less than an angle threshold, and one edge of the second target triangle is the same as the first edge of the to-be-decoded triangle.

37. The method according to claim 36, wherein the method further comprises:

obtaining, by the decoder side, information about the angle threshold based on the decoding information.

38. The method according to claim 33, wherein the method further comprises:

obtaining, by the decoder side, information about the first spatial range based on the decoding information.

39. The method according to claim 26, wherein the third bitstream comprises a first sub-bitstream and a second sub-bitstream, the attribute information comprises texture coordinate information and a texture map, and the texture coordinate information is used for representing texture coordinates corresponding to vertices in the target three-dimensional mesh; and

the determining attribute information corresponding to the target three-dimensional mesh based on the third bitstream and the attribute encoding manner comprises:

in a case that the attribute encoding manner is a first attribute encoding manner, determining, by the decoder side, the texture coordinates corresponding to the vertices in the target three-dimensional mesh based on the first sub-bitstream; and

decoding, by the decoder side, the second sub-bitstream by using a video decoder, to obtain the texture map corresponding to the target three-dimensional mesh.

40. The method according to claim 39, wherein the determining the texture coordinates corresponding to the vertices in the target three-dimensional mesh based on the first sub-bitstream comprises:

performing, by the decoder side, entropy decoding on the first sub-bitstream, to obtain a prediction residual corresponding to each decoded triangle;

selecting, by the decoder side, a second edge from an edge set corresponding to the target three-dimensional mesh for any decoded triangle, wherein the edge set is a set of at least one edge of the decoded triangle in the target three-dimensional mesh;

determining, by the decoder side, a predicted triangle based on the second edge and vertices corresponding to the second edge;

determining, by the decoder side, a vertex of the second edge other than two vertices connected to the second edge among vertices corresponding to the predicted triangle as a predicted vertex; and

determining, by the decoder side, an actual vertex corresponding to the decoded triangle based on the predicted vertex and the predicted residual, wherein coordinates of the actual vertex in the target three-dimensional mesh are texture coordinates.

41. The method according to claim 26, wherein the third bitstream comprises a first sub-bitstream and a second sub-bitstream, the attribute information comprises reconstructed texture coordinate information and a reconstructed texture map, and the reconstructed texture coordinate information is used for representing reconstructed texture coordinates corresponding to vertices in the target three-dimensional mesh; and

the determining attribute information corresponding to the target three-dimensional mesh based on the third bitstream and the attribute encoding manner comprises:

in a case that the attribute encoding manner is a second attribute encoding manner, determining, by the decoder side, the reconstructed texture coordinates corresponding to the vertices in the target three-dimensional mesh based on the first sub-bitstream; and

decoding, by the decoder side, the second sub-bitstream by using a video decoder, to obtain the reconstructed texture map corresponding to the target three-dimensional mesh.

42. The method according to claim 26, wherein the attribute information comprises reconstructed texture coordinate information and a reconstructed texture map; and

the determining attribute information corresponding to the target three-dimensional mesh based on the third bitstream and the attribute encoding manner comprises:

in a case that the attribute encoding manner is a third attribute encoding manner, determining, by the decoder side, reconstructed texture coordinates corresponding to vertices in the target three-dimensional mesh based on the third bitstream; and

decoding, by the decoder side, the third bitstream by using a video decoder, to obtain the reconstructed texture map corresponding to the target three-dimensional mesh.

43. An encoding apparatus, comprising:

an encoding module, configured to encode first information corresponding to a target three-dimensional mesh, to obtain a first bitstream, wherein the first information is determined based on geometry information corresponding to the target three-dimensional mesh;

a first determining module, configured to determine a second bitstream based on connection information corresponding to a first reconstructed mesh, wherein the first reconstructed mesh is determined based on the first information and the target three-dimensional mesh;

a second determining module, configured to determine a third bitstream based on target information and an attribute encoding manner, wherein the target information comprises attribute information corresponding to the first reconstructed mesh or comprises the target three-dimensional mesh and a target texture map corresponding to the target three-dimensional mesh; and

a generation module, configured to generate a target bitstream based on the first bitstream, the second bitstream, and the third bitstream.

44. A decoding apparatus, comprising:

a decomposition module, configured to decompose an obtained target bitstream, to obtain first information, decoding information, an attribute encoding manner, and a third bitstream;

an obtaining module, configured to obtain geometry information corresponding to a target three-dimensional mesh based on the first information;

a third determining module, configured to determine connection information corresponding to the target three-dimensional mesh based on the decoding information; and

a fourth determining module, configured to determine attribute information corresponding to the target three-dimensional mesh based on the third bitstream and the attribute encoding manner.

45. A terminal, comprising a processor and a memory, wherein a program or instructions executable on the processor is/are stored in the memory; and when the program or the instructions is/are executed by the processor, the steps of the encoding method according to any one of claims 1 to 25 or the steps of the decoding method according to any one of claims 26 to 42 are implemented.

46. A readable storage medium, wherein the readable storage medium stores a program or instructions; and when the program or the instructions is/are executed by a processor, the steps of the encoding method according to any one of claims 1 to 25 or the steps of the decoding method according to any one of claims 26 to 42 are implemented.

| An encoder side encodes first information corresponding to a target three-dimensional mesh, to obtain a first bitstream | S101 |

| The encoder side determines a second bitstream based on connection information corresponding to a reconstructed mesh | S102 |

| Determine a third bitstream based on target information and an attribute encoding manner | S103 |

| The encoder side generates a target bitstream based on the first bitstream, the second bitstream, and the third bitstream | S104 |

FIG. 1

FIG. 2

Start

Quantity of iterations=0

The quantity of iterations is less than a maximum quantity of iterations

No → End

Yes

Voxel division — 301

Find a filled voxel — 302

Calculate a smooth score of each filled voxel on each projection plane — 303

Find a neighboring filled voxel — 304

Use a voxel smooth score of the neighboring filled voxel on each projection plane — 305

Calculate a normal score by using a normal vector of a vertex and a normal vector of a candidate projection plane — 306

Calculate a final score of each voxel on each projection plane — 307

Cluster vertices by using the score in step 307 — 308

Quantity of iterations (NumIterations)++

# FIG. 3

Anchor **(ANCHOR)(#0)**     (#1)     (#2)     (#3)

FIG. 4

```
┌─────────────────────────────┐
│  Obtain a vertex arrangement │──── 501
│           order              │
└─────────────────────────────┘
               │
               ▼
┌─────────────────────────────┐
│ Generate a raw patch (raw patch) │──── 502
└─────────────────────────────┘
               │
               ▼
┌─────────────────────────────┐
│  Generate a high-precision   │──── 503
│        geometry map          │
└─────────────────────────────┘
```

FIG. 5

X packing (packing)   y packing (packing)   z packing (packing)

$$X_0X_1X_2X_3\cdots \qquad \cdots X_{n-1}$$
$$X_n\cdots \qquad \cdots X_{n+m-1}\ Y_0Y_1Y_2\cdots$$
$$\cdots$$
$$\cdots Y_{n+m-1}\ Z_0Z_1Z_2\cdots$$
$$\cdots Z_{n+m-1}$$

Raw patch (Raw patch)

FIG. 6

FIG. 7

FIG. 8

FIG. 9

FIG. 10(a)

FIG. 10(b)

FIG. 10(c)

| Decompose an obtained target bitstream, to obtain first information, decoding information, an attribute encoding manner, and a third bitstream | S1101 |

| A decoder side obtains geometry information corresponding to a target three-dimensional mesh based on the first information | S1102 |

| The decoder side determines connection information corresponding to the target three-dimensional mesh based on the decoding information | S1103 |

| The decoder side determines attribute information corresponding to the target three-dimensional mesh based on the third bitstream and the attribute encoding manner | S1104 |

FIG. 11

Obtain a two-dimensional patch (2D patch) ⌐ 1201

Reconstruct a three-dimensional patch (3D patch) ⌐ 1202

Reconstruct a low-precision geometry model ⌐ 1203

Reconstruct a high-precision geometry model ⌐ 1204

FIG. 12

⌐ 1300

Encoding apparatus

Encoding module ⌐ 1301

First determining module ⌐ 1302

Second determining module ⌐ 1303

Generation module ⌐ 1304

FIG. 13

1400

Decoding apparatus

1401
Decomposition module

1402
Obtaining module

1403
Third determining module

1404
Fourth determining module

FIG. 14

1500

Communication device

1501
Processor

1502
Memory

FIG. 15

1600

Terminal

| | |
|---|---|
| 1601 — Radio frequency unit | Network module — 1602 |

1610

Memory

1609 — Application program

Operating system

Processor

Audio output unit — 1603

1604

Input unit

Graphics processing unit — 16041

1608 — Interface unit

Microphone — 16042

1607

User input unit

16071 — Touch panel

16072 — Another input device

1606

Display unit

Display panel — 16061

Sensor — 1605

FIG. 16

| INTERNATIONAL SEARCH REPORT | | International application No. |
|---|---|---|
| | | **PCT/CN2023/087281** |

**A. CLASSIFICATION OF SUBJECT MATTER**

G06T 9/00(2006.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 编码, 解码, 压缩, 三维, 网格, 连接, 顶点, 几何, 纹理, 属性, encod+, decod+, 3d, mesh, connect+, vertex, geometry, texture, property

**C. DOCUMENTS CONSIDERED TO BE RELEVANT**

| Category* | Citation of document, with indication, where appropriate, of the relevant passages | Relevant to claim No. |
|---|---|---|
| X | US 2021090301 A1 (APPLE INC.) 25 March 2021 (2021-03-25)<br>description, paragraphs 0085-0317 and 577-585, and claims 1-22 | 1-21, 26-39, 43-46 |
| A | CN 101354788 A (DALIAN NATIONALITIES UNIVERSITY) 28 January 2009 (2009-01-28)<br>entire document | 1-46 |
| A | CN 102625126 A (BEIJING UNIVERSITY OF TECHNOLOGY) 01 August 2012 (2012-08-01)<br>entire document | 1-46 |
| A | CN 113938666 A (SHENZHEN PROMETHEUS VISUAL TECHNOLOGY CO., LTD.) 14 January 2022 (2022-01-14)<br>entire document | 1-46 |
| A | KR 20080063064 A (ELECTRONICS AND TELECOMMUNICATIONS RESEARCH INSTITUTE et al.) 03 July 2008 (2008-07-03)<br>entire document | 1-46 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 June 2023** | **23 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/087281**

### C. DOCUMENTS CONSIDERED TO BE RELEVANT

| Category* | Citation of document, with indication, where appropriate, of the relevant passages | Relevant to claim No. |
|---|---|---|
| A | 吴晓军 等 (WU, Xiaojun et al.). "基于三维模型几何信息的纹理图像压缩 (Texture Image Compression Algorithm Based on 3D Geometric Information)" 计算机辅助设计与图形学学报 *(Journal of Computer-Aided Design & Computer Graphics)*, No. 03, 15 March 2016 (2016-03-15), entire document | 1-46 |

Form PCT/ISA/210 (second sheet) (July 2022)

<div align="center">

**INTERNATIONAL SEARCH REPORT**
**Information on patent family members**

</div>

International application No.

**PCT/CN2023/087281**

| Patent document cited in search report | | | Publication date (day/month/year) | Patent family member(s) | | | Publication date (day/month/year) |
|---|---|---|---|---|---|---|---|
| US | 2021090301 | A1 | 25 March 2021 | US | 11450030 | B2 | 20 September 2022 |
| | | | | US | 2023030913 | A1 | 02 February 2023 |
| | | | | WO | 2021062044 | A1 | 01 April 2021 |
| CN | 101354788 | A | 28 January 2009 | None | | | |
| CN | 102625126 | A | 01 August 2012 | None | | | |
| CN | 113938666 | A | 14 January 2022 | None | | | |
| KR | 20080063064 | A | 03 July 2008 | KR | 100923946 | B1 | 29 October 2009 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210378876